# EUROPEAN PATENT SPECIFICATION

(11) **EP 2 293 641 B1**
(45) Date of publication and mention of the grant of the patent: **11.07.2012**
(21) Application number: 10184688.9
(22) Date of filing: 13.05.2005
(51) Int. Cl.: H04W 36/00

(54) **Messaging in an unlicensed mobile access telecommunications system**
Nachrichtenübermittlung in einem unlizensierten Mobilzugangs-Telekommunikationssystem
Messagerie mise en oeuvre dans un système d'accès d'un système mobile de télécommunications sans licence

(30) Priority: 14.05.2004 US 571421 P; 15.12.2004 US 13883; 31.03.2005 US 97866; 12.05.2005 US 129134
(43) Date of publication of application: 09.03.2011
(62) Divisional of application: 05749844.6
(73) Proprietor: Kineto Wireless, Inc., Milpitas, CA 95035 (US)
(72) Inventor: Gallagher, Michael, D., San Jose, CA 95124 (US); Gupta, Rajeev, Sunnyvale, CA 94086 (US); Markovic, Milan, Pleasanton, CA 94588 (US); Shi, Jianxiong, Pleasanton, CA 94588 (US); Baranowski, Joseph, G., Morgan Hill, CA 95037 (US)
(74) Representative: Hirsch & Associés

(56) References cited:
- WO-A1-2004/039111
- WO-A2-2004/036770
- US-A1- 2004 037 312
- "Digital cellular telecommunications system (Phase 2+); Universal Mobile Telecommunications System (UMTS); Mobile radio interface Layer 3 specification; Core network protocols; Stage 3 (3GPP TS 24.008 version 5.6.0 Release 5); ETSI TS 124 008", ETSI STANDARDS, LIS, SOPHIA ANTIPOLIS CEDEX, FRANCE, vol. 3-CN1, no. V5.6.0, 1 December 2002 (2002-12-01), XP014007949, ISSN: 0000-0001

## Description

### FIELD OF THE INVENTION

The field of invention relates generally to telecommunications. More particularly, this invention relates to messaging employed in an unlicensed mobile access (UMA) telecommunication system that includes both licensed and unlicensed radio infrastructure.

### BACKGROUND INFORMATION

Licensed wireless systems provide mobile wireless communications to individuals using wireless transceivers. Licensed wireless systems refer to public cellular telephone systems and/or Personal Communication Services (PCS) telephone systems. Wireless transceivers include cellular telephones, PCS telephones, wirelessenabled personal digital assistants, wireless modems, and the like.

Licensed wireless systems utilize wireless signal frequencies that are licensed from governments. Large fees are paid for access to these frequencies. Expensive base station (BS) equipment is used to support communications on licensed frequencies. Base stations are typically installed approximately a mile apart from one another (*e.g.*, cellular towers in a cellular network). The wireless transport mechanisms and frequencies employed by typical licensed wireless systems limit both data transfer rates and range. As a result, the quality of service (voice quality and speed of data transfer) in licensed wireless systems is considerably inferior to the quality of service afforded by landline (wired) connections. Thus, the user of a licensed wireless system pays relatively high fees for relatively low quality service.

Landline (wired) connections are extensively deployed and generally perform at a lower cost with higher quality voice and higher speed data services. The problem with landline connections is that they constrain the mobility of a user. Traditionally, a physical connection to the landline was required.

In the past few years, the use of unlicensed wireless communication systems to facilitate mobile access to landline-based networks have seen rapid growth. For example, such unlicensed wireless systems may support wireless communication based on the IEEE 802.11a, b or g standards (WiFi), or the Bluetooth™ standard. The mobility range associated with such systems is typically on the order of 100 meters or less. A typical unlicensed wireless communication system includes a base station comprising a wireless access point (AP) with a physical connection (*e.g.*, coaxial, twisted pair, or optical cable) to a landline-based network. The AP has a RF transceiver to facilitate communication with a wireless handset that is operative within a modest distance of the AP, wherein the data transport rates supported by the WiFi and Bluetooth™ standards are much higher than those supported by the aforementioned licensed wireless systems. Thus, this option provides higher quality services at a lower cost, but the services only extend a modest distance from the base station.

Currently, technology is being developed to integrate the use of licensed and unlicensed wireless systems in a seamless fashion, thus enabling a user to access, via a single handset, an unlicensed wireless system when within the range of such a system, while accessing a licensed wireless system when out of range of the unlicensed wireless systemand for directing them to an appropriate network controller. WO 2004/036770 A2 (KINETO WIRELESS INC) specifies extending the coverage area of a licensed wireless communication system using an unlicensed wireless communication system. U.S. Patent Application Publication 2004/037312 A1 (SPEAR STEPHEN L) specifies a method and communication network for operating a cross coding element. In order to support more rapid implementation by various vendors, a standardized set of messages for performing various functions, such as registration, channel activation, handover, and the like are needed.

### SUMMARY OF THE INVENTION

In accordance with aspects of the present invention, techniques are disclosed for performing messaging between mobile stations (MSs) and UMA network controllers (UNCs) in an unlicensed mobile access network (UMAN). To facilitate various operations, URR (UMA radio resource) messages are exchanged between an MS and one or more UNCs operating in the HUMAN. By employing a wireless link using an unlicensed radio frequency, such as an 802.11-based link or a Bluetooth™ link, the MS may access the UMAN via a wireless access point (AP) that is communicatively-coupled to the UNC via an IP network. The URR messages are sent between the MS and the UNC using an Up interface comprising a set of layered protocols over an underlying IP transport.

The present invention relates to a method for performing a handover of a mobile station (MS) from an unlicensed wireless first communication system to a second communication system comprising a licensed radio access network and a core network according to claim 1. The present invention also relates to a computer readable storage medium according to claim 4. The present invention also relates to a network controller according to claim 5. The present invention also relates to a MS according to claim 11. In accordance with aspect of the present invention, Unlicensed Mobile Access (UMA) Radio Resource (URR) messages with specific formats are disclosed. Each of the URR messages includes a basic set of information elements (IEs) including a protocol discriminator, a skip indicator, and a message type via which the message may be identified. Further IEs relevant to each particular URR handover message are also disclosed.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:

Figure 1A provides an overview of the Unlicensed Mobile Access (UMA) mobile service solution in accordance with one embodiment of the present invention;

Figure 1B illustrates protocol layers of a mobile set in accordance with one embodiment;

Figure 1C illustrates a method of protocol conversion in accordance with one embodiment;

Figure 2A illustrates an overview of a level 1, level 2, and level 3 GSM-related protocol architecture for one embodiment of a mobile station that provides unlicensed radio links via Bluetooth signaling;

Figure 2B illustrates an overview of a level 1, level 2, and level 3 GSM-related protocol architecture for one embodiment of a mobile station that provides unlicensed radio links via IEEE 802.11 signaling;

Figure 3A illustrates the Up interface protocol architecture in support of CS Domain signaling, as well as UMA-specific signaling, according to one embodiment;

Figure 3B shows Bluetooth lower layers employed by a mobile station and access point to facilitate physical layer communications;

Figure 3C shows IEEE 802.11 lower layers employed by a mobile station and access point to facilitate physical layer communications;

Figure 3D illustrates the Up CS domain voice bearer protocol architecture in support of GSM voice transmission, according to one embodiment;

Figure 3E illustrates the Up GPRS user plane protocol architecture, according to one embodiment;

Figure 3F illustrates the Up protocol architecture in support of GPRS Signaling, according to one embodiment;

Figure 4 illustrates several possible GSM and UMA coverage scenarios in accordance with one embodiment;

Figure 5 illustrates exemplary mobility management functions in one embodiment;

Figure 6A illustrates a URR Register message exchange corresponding to a successful registration;

Figure 6B illustrates a URR Register message exchange corresponding to a rejected registration;

Figure 6C illustrates a URR Register message exchange under which an MS is redirected from a first UNC to a second UNC;

Figure 7 is a table illustrating one embodiment of a URR REGISTER REQUEST message format;

Figure 8A is a table illustrating one embodiment of a URR REGISTER ACK message format;

Figure 8B is a table illustrating one embodiment of a UMA GSM System Information information element;

Figure 9 is a table illustrating one embodiment of a URR REGISTER REJECT/REDIRECT message format;

Figure 10A illustrates a URR message sequence including a URR REGISTER UPDATE UPLINK message and a URR REGISTER REDIRECT message;

Figure 10B illustrates a URR message sequence including a URR REGISTER UPDATE DOWNLINK message, a URR DEREGISTER message, and a URR REGISTER REDIRECT message;

Figure 11 is a table illustrating one embodiment of a URR REGISTER UPDATE UPLINK message format;

Figure 12 is a table illustrating one embodiment of a URR REGISTER UPDATE DOWNLINK message format;

Figure 13 is a table illustrating one embodiment of a URR DEREGISTER message format;

Figure 14 is a table illustrating one embodiment of a lookup table containing 8-bit values corresponding to causes for various URR actions;

Figure 15 illustrates a channel activation message sequence;

Figure 16 is a table illustrating one embodiment of a URR ACTIVATE CHANNEL message format;

Figure 17 is a table illustrating one embodiment of a URR ACTIVATE CHANNEL ACK message format;

Figure 18 is a table illustrating one embodiment of a URR ACTIVATE CHANNEL FAILURE message format;

Figure 19 is a table illustrating one embodiment of a URR ACTIVATE CHANNEL COMPLETE message format;

Figure 20 illustrates a handover message sequence initiated by a mobile station;

Figure 21 is a table illustrating one embodiment of a URR HANDOVER ACCESS message format;

Figure 22 is a table illustrating one embodiment of a URR HANDOVER COMPLETE message format;

Figure 23A illustrates a handover message sequence initiated in response to a URR UPLINK QUALITY INDICATION message sent from a UNC;

Figure 23B illustrates a handover message sequence initiated in response to a URR UPLINK QUALITY INDICATION message sent from a UNC, in accordance with a handover failure;

Figure 24 is a table illustrating one embodiment of a URR UPLINK QUALITY INDICATION message format;

Figure 25 is a table illustrating one embodiment of a URR HANDOVER REQUIRED message format;

Figure 26A and 26B are table portions illustrating one embodiment of a URR HANDOVER COMMAND message format;

Figure 27 is a table illustrating one embodiment of a URR HANDOVER FAILURE message format;

Figure 28 illustrates a URR CLEAR REQUEST message sent from a mobile station to a UNC;

Figure 29 is a table illustrating one embodiment of a URR CLEAR REQUEST message format;

Figure 30 illustrates a URR release message sequence initiated by a UNC;

Figure 31 is a table illustrating one embodiment of a URR RR RELEASE message format;

Figure 32 is a table illustrating one embodiment of a URR RR RELEASE COMPLETE message format;

Figure 33 illustrates a URR paging message sequence initiated by a UNC;

Figure 34 is a table illustrating one embodiment of a URR PAGING REQUEST message format;

Figure 35 is a table illustrating one embodiment of a URR PAGING RESPONSE message format;

Figure 36 illustrates a URR classmark message sequence initiated by a UNC;

Figure 37 is a table illustrating one embodiment of a URR CLASSMARK ENQUIRY message format;

Figure 38 is a table illustrating one embodiment of a URR CLASSMARK CHANGE message format;

Figure 39 is a schematic block diagram illustrating one embodiment of a high-level architecture of a UNC; and

Figure 40 is a schematic block diagram illustrating one embodiment of a high-level architecture of a mobile station.

### DETAILED DESCRIPTION

In the following description, numerous specific details are set forth to provide a thorough understanding of embodiments of the invention. One skilled in the relevant art will recognize, however, that the invention can be practiced without one or more of the specific details, or with other methods, components, materials, *etc*. In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the present description the unlicensed wireless system may be a short-range wireless system, which may be described as an "indoor" solution. However, it will be understood through the application that the unlicensed wireless system includes unlicensed wireless systems that cover not only a portion of a building but also local outdoor regions, such as outdoor portions of a corporate campus serviced by an unlicensed wireless system. The mobile station may, for example, be a wireless phone, smart phone, personal digital assistant, or mobile computer. The "mobile station" may also, for example, be a fixed wireless device providing a set of terminal adapter functions for connecting Integrated Services Digital Network (ISDN) or Plain Old Telephone Service (POTS) terminals to the wireless system. Application of the present invention to this type of device enables the wireless service provider to offer so-called landline replacement service to users, even for user locations not sufficiently covered by the licensed wireless system. The present description is in the context of the UMA (Unlicensed Mobile Access) standardized architecture as promulgated by the UMA consortium. However, the invention is not so limited.

Throughout the following description, acronyms commonly used in the telecommunications industry for wireless services are utilized along with acronyms specific to the present invention. A table of acronyms specific to this application is included in Appendix I.

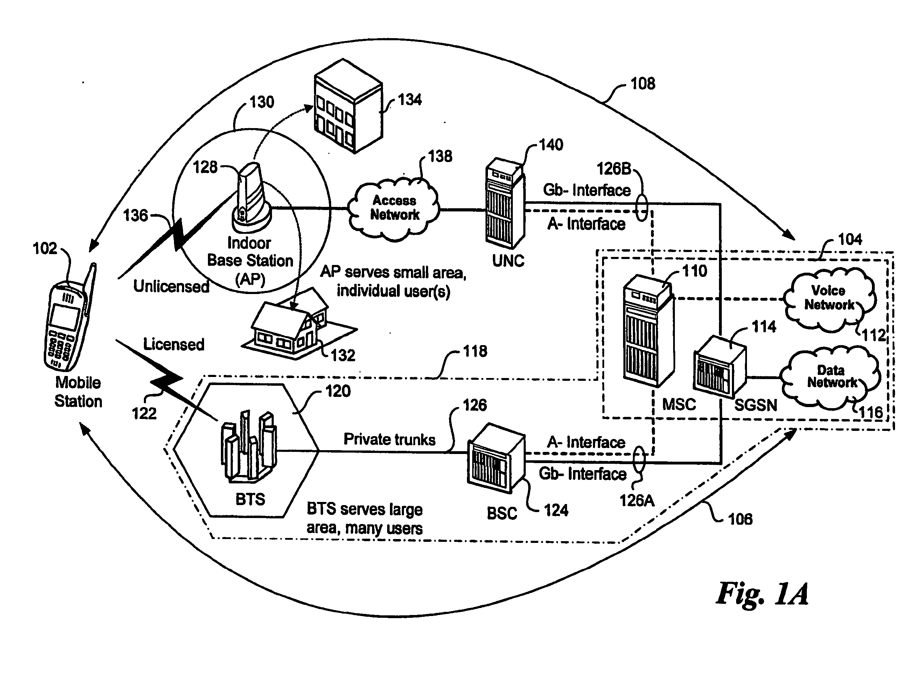

Figure 1A illustrates an Unlicensed Mobile Access (UMA) architecture 100 in accordance with one embodiment of the present invention. UMA architecture 100 enables a user of a mobile station 102 to access a voice and telecommunications network 104 via either a licensed wireless communications session 106, or an unlicensed wireless communication session 108. The telecommunications network 104 includes a mobile switching center (MSC) 110, which provides access to a voice network 112, and a Serving GPRS (General Packet Radio Service) Support Node (SGSN) 114, which provides access to a data network 116. MSC 110 also provides an internal visitor location register (VLR) function.

In further detail, the licensed wireless communication session is facilitated by infrastructure provided by a licensed wireless network 118 that includes telecommunications network 104. In the illustrated embodiment, licensed wireless network 118 depicts components common to a GSM-(Global System for Mobile Communication) based cellular network that includes multiple base transceiver stations (BTS) 120 (of which only one is shown for simplicity) that facilitate wireless communication services for various mobile stations 102 via respective licensed radio links 122 (*e.g.*, radio links employing radio frequencies within a licensed bandwidth). Typically, the multiple BTSs 120 are configured in a cellular configuration (one per each cell) that covers a wide service area. The various BTSs 120 for a given area or region are managed by a base station controller (BSC) 124, with each BTS 120 communicatively-coupled to its BSC 124 via a private trunk 126. In general, a large licensed wireless network, such as that provided by a regional or nationwide mobile services provider, will include multiple BSCs 124.

Each BSC 124 communicates with telecommunications network 104 through a standard base station controller interface 126. For example, a BSC 124 may communicate with MSC 110 via the GSM A-interface for circuit switched voice services and with SGSN 114 via the GSM Gb interface for packet data services (GPRS). Conventional licensed voice and data networks 104 include protocols to permit seamless handoffs from one recognized BSC 124 to another BSC (not shown).

An unlicensed communication session 108 is facilitated via an (wireless) access point (AP) 128 comprising an indoor base station 130. Typically, AP 128 will be located in a fixed structure, such as a home 132 or an office building 134. The service area of indoor base station 130 includes an indoor portion of a building, although it will be understood that the service area of an indoor base station may include an outdoor portion of a building or campus. As indicated by the arrow representing unlicensed communication session 108, the mobile station 102 may be connected to the telecommunications network 114 via a second data path that includes an unlicensed wireless channel 136, access point 128, an access network 138, and an unlicensed mobile access network controller (UNC) 140. The UNC 140 communicates with telecommunications network 104 using a base station controller interface 126B that is similar to base station controller interface 126A, and includes a GSM A interface and Gb interface. AP 128 may include software entities stored in memory and executing on one or more microprocessors (not shown in Figure 1A) adapted to perform protocol conversion.

The unlicensed wireless channel 136 is facilitated by a radio link employing a wavelength (or wavelength range) in an unlicensed, free spectrum (e.g., spectrum around 2.4 GHz, 5 GHz, 11-66 GHz). An unlicensed wireless service hosting unlicensed wireless channel 136 may have an associated communication protocol. As examples, the unlicensed wireless service may be a Bluetooth™ compatible wireless service, or a wireless local area network (LAN) (WiFi) service (e.g., the IEEE 802.11a, b, or g wireless standard). This provides the user with potentially improved quality of service in the service regions of the unlicensed wireless service (i.e., within the service range of a corresponding AP). Thus, when a subscriber is within range of the unlicensed AP, the subscriber may enjoy low cost, high speed, and high quality voice and data services. In addition, the subscriber enjoys extended service range since the handset can receive services deep within a building at locations that otherwise may not be reliably serviced by a licensed wireless system. At the same time, the subscriber can roam outside the range of the unlicensed AP without dropping communications. Instead, roaming outside the range of the unlicensed AP results in a seamless handoff (also referred to as a handover) wherein communication services are automatically provided by the licensed wireless system, as described in more detail in U.S. Pat. No. 6, 922, 559.

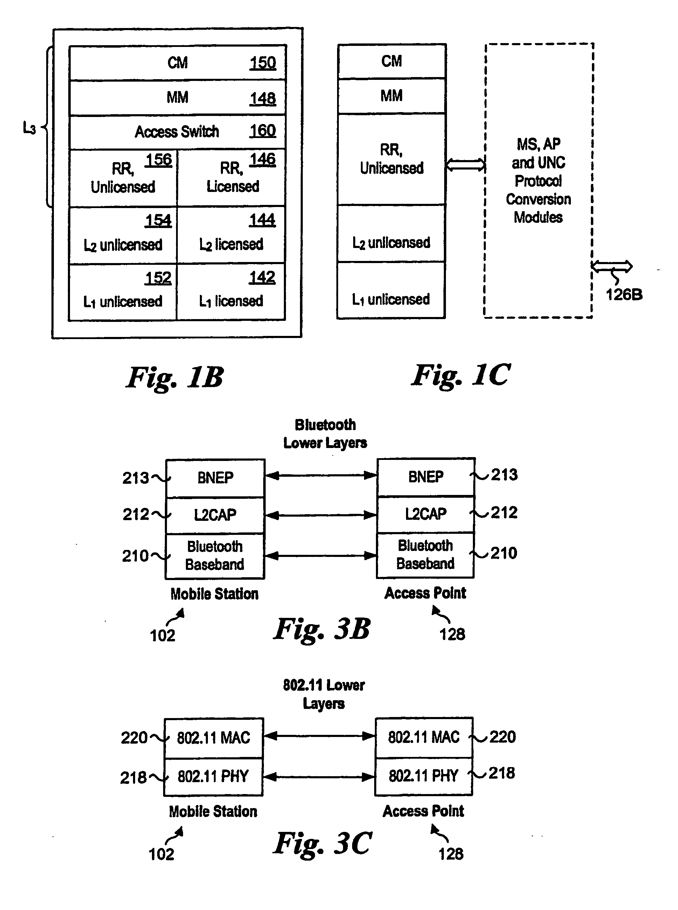

Mobile station 102 may include a microprocessor and memory (not shown) that stores computer program instructions for executing wireless protocols for managing communication sessions. As illustrated in Figure 1B, in one embodiment the mobile station 102 includes a layer 1 protocol layer 142, layer 2 protocol layer 144, and a layer 3 signaling protocol layer for the licensed wireless service that includes a radio resource (RR) sublayer 146, a mobility management (MM) sublayer 148, and a call management (CM) layer 150. It will be understood that the level 1, level 2, and level 3 layers may be implemented as software modules, which may also be described as software "entities." In accordance with a common nomenclature for licensed wireless services, layer 1 is the physical layer, *i.e.,* the physical baseband for a wireless communication session. The physical layer is the lowest layer of the radio interface and provides functions to transfer bit streams over physical radio links. Layer 2 is the data link layer. The data link layer provides signaling between the mobile station and the base station controller. The RR sublayer is concerned with the management of an RR-session, which is the time that a mobile station is in a dedicated mode, as well as the configuration of radio channel, power controller, discontinuous transmission and reception, and handovers. The mobility management layer manages issues that arise from the mobility of the subscriber. The mobility management layer may, for example, deal with mobile station location, security functions, and authentication. The call control management layer provides controls for end-to-end call establishment. These functions for a licensed wireless system are well known by those in the art of wireless communication.

The mobile station may also include an unlicensed wireless service physical layer 152 (*i.e.,* a physical layer for unlicensed wireless service such as Bluetooth, WiFi, or other unlicensed wireless channel (*e.g.*, WiMAX)). The mobile station also includes an unlicensed wireless service level 2 link layer 154, and an unlicensed wireless service radio resource sublayer(s) 156. An access mode switch 160 is included for the mobile management 148 and call management layers 150 to access the unlicensed wireless service radio resource sublayer 156 and unlicensed wireless service link layer 154 when the mobile station 102 is within range of an unlicensed AP 128 and to support switching between licenced RR sublayer 146 and unlicensed wireless service RR sublayer 156.

The unlicensed radio resource sublayer 156 and unlicensed link layer 154 may include protocols specific to the unlicensed wireless service utilized in addition to protocols selected to facilitate seamless handoff between licensed and unlicensed wireless systems. Consequently, the unlicensed radio resource sublayer 156 and unlicensed link layer 154 need to be converted into a format compatible with a conventional base station controller interface protocol 126 recognized by a MSC, SGSN, or other voice or data network.

Referring to Figure 1C, in one embodiment of the present invention, the mobile station 102, AP 128 and UNC 140 provide an interface conversion function to convert the level 1, level 2, and level 3 layers of the unlicensed service into a conventional base station subnetwork (BSS) interface 126B (*e.g.*, an A-interface or a Gb-interface). As a result of the protocol conversion, a communication session may be established that is transparent to the voice network/data network 104, *i.e.,* the voice/data network 104 uses its standard interface and protocols for the communication session as it would with a conventional communication session handled by a conventional base transceiver station. For example, in some embodiments the mobile station 102 and UNC 140 are configured to initiate and forward location update and service requests. As a result, protocols for a seamless handoff of services that is transparent to voice/data network 104 are facilitated. This permits, for example, a single phone number to be used for both the licensed wireless service and the unlicensed wireless service. Additionally, the present invention permits a variety of services that were traditionally offered only through licensed wireless services to be offered through an unlicensed wireless service. The user thus gets the benefit of potentially higher quality service when their mobile station is located within the area serviced by a high bandwidth unlicensed wireless service while also having access to conventional phone services.

The licensed wireless service may comprise any licensed wireless service having a defined BSS interface protocol 126 for a voice/data network 104. In one embodiment, the licensed wireless service is a GSM/GPRS radio access network, although it will be understood that embodiments of the present invention include other licensed wireless services. For this embodiment, the UNC 140 interconnects to the GSM core network via the same base station controller interfaces 126 used by a standard GSM BSS network element. For example, in a GSM application, these interfaces are the GSM A-interface for circuit switched voice services and the GSM Gb interface for packet data services (GPRS). In a UMTS (Universal Mobile Telecommunications System) application of the invention, the UNC 140 interconnects to the UMTS network using a UMTS Iu-cs interface for circuit switched voice services and the UMTS Iu-ps interface for packet data services. In a CDMA application of the invention, the UNC 140 interconnects with the CDMA network using the CDMA A1 and A2 interfaces for circuit switched voice services and the CDMA A10 and A11 interfaces for packet data services.

In a GSM/GPRS embodiment, UNC 140 appears to the GSM/GPRS core network as a GSM BSS network element and is managed and operated as such. In this architecture the principle elements of transaction control (*e.g.*, call processing) are provided by higher network elements; namely the MSC 110 visitor location register (VLR) and the SGSN 114. Authorized mobile stations are allowed access to the GSM/GPRScore network either directly through the GSM radio access network if they are outside of the service area of an AP 128 or via the UMA network system if they are within the service area of an AP.

Since a communication session hosted by the UMA architecture 108 is transparent to a voice network 112 or data network 116, the unlicensed wireless service may support all user services that are typically offered by a wireless service provider. In the GSM case, this typically includes the following basic services: Telephony; Emergency call (e.g., E911 calling in North America); Short message, mobile-terminated point-to-point (MT/PP); Short message, mobile-originated point-to-point (MO/PP); GPRS bearer services; and Handover (outdoor-to-indoor, indoor-to-outdoor, voice, data, SMS, SS). Additionally, GSM may also support, various supplementary services that are well-known in the art.

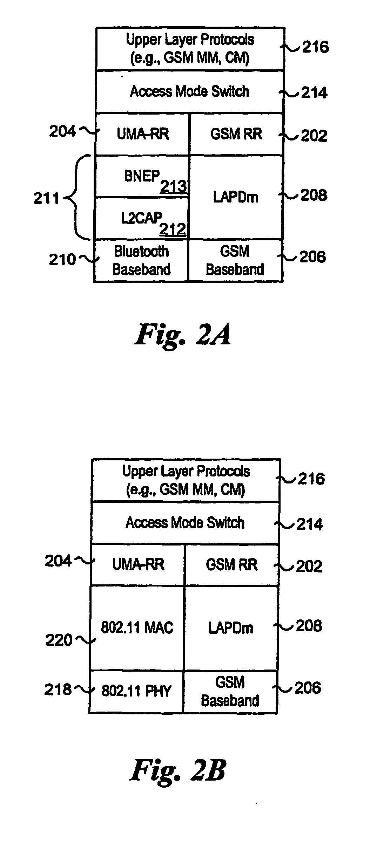

Figure 2A provides an overview of a level 1, level 2, and level 3 GSM-related protocol architecture for one embodiment of mobile station 102 that provides unlicensed radio links via Bluetooth signaling. As illustrated, there are two logical radio resource (RR) management entities: the GSM RR entity 202 and the UMA-RR entity 204. The protocol architecture includes a GSM baseband level 1 layer 206, GSM level2link layer (LAPDm) 208, Bluetooth baseband levelllayer 210, Bluetooth level 2 layers 211 including a layer 2 connection access procedure (L2CAP) layer 212 and a BNEP layer 213, an access mode switch 214, and upper layer protocols 216. When the mobile station is operating in an UMA mode, the UMA-RR entity 204 is the current "serving" RR entity providing service to the mobility management (MM) sublayer via the designated service access point (RR-SAP). The GSM RR entity is detached from the MM sublayer in this mode. The UMA-RR entity 204 provides a new set of functions, and is responsible for several tasks. First the UMA-RR entity is responsible for discovery of UMA coverage and UMA registration. Second, the UMA-RR entity is responsible for emulation of the GSM RR layer to provide the expected services to the MM layer; *i.e.*, create, maintain and tear down RR connections. All existing GSM 04.07 primitives defined for the RR-SAP apply. The plug-in of UMA-RR entity 204 is made transparent to the upper layer protocols in this way. Third, a UMA-RR entity 204 module is responsible for coordination with the GSM RR entity to manage access mode switching and handover, as described in further detail in US. Pat. No. 7, 127, 250.

Figure 2B provides an overview of a level 1, level 2, and level 3 GSM-related protocol architecture for one embodiment of mobile station 102 that provides unlicensed radio links via IEEE 802.11 signaling. All of the entities and layers are the same as described above for Figure 2A, except that the Bluetooth layers have been replaced with an 802.11 PHY layer 218 and an 802.11 MAC layer 220.

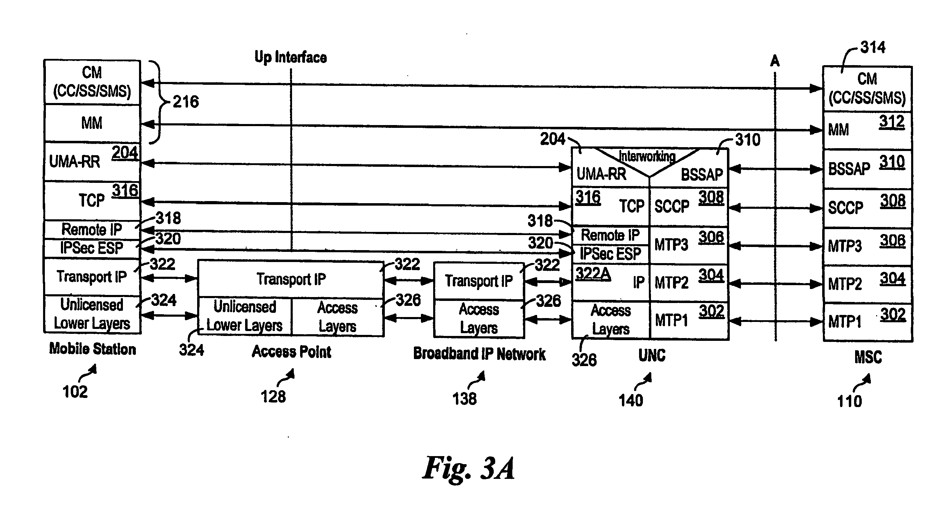

Figure 3A illustrates the Up interface protocol architecture in support of circuit switched (CS) Domain signaling, as well as UMA-specific signaling, according to one embodiment. The MSC sublayers are conventional, well known features known in the art in regards to the message transfer part (MTP) interfaces MTP1 302, MTP2 304, and MTP3 306, signaling connection control part (SCCP) 308, base station system application part (BSSAP) 310, mobility management interface 312, and connection management interface 314.

The UMA-RR protocol supports the UMA "layer 3" signaling functions via UMA-RR layers 204 provided by each of the mobile station 102 and UNC 140. The UNC 140, acting like a BSC, terminates UMA-RR protocol messages and is responsible for the interworking between these messages and the analogous A-interface messages.

The layers below the UMA-RR layer 204 in each of mobile station 104 and UNC 140 include a TCP layer 316, a remote IP layer 318, and an IPSec (IP security) layer 320. As an option, a standard Secure Socket Layer (SSL) protocol running over TCP/IP (not shown) may be deployed in place of IPSec layer 320.

Lower-level IP connectivity between mobile station 102 and UNC 140 is supported by appropriate layers hosted by an intervening access point 128 and broadband IP network 138 (*i.e.,* the access network 138 shown in Figure 1A). The components for supporting the IP transport layer (*i.e.*, the conventional network layer 3 under the seven-layer OSI model) include a transport IP layers 322 for each of the mobile station 104, AP 128, and IP network 138, and an IP layer 322A at UNC 140.

At the lowest layers (*i.e.*, the physical and data link layers), mobile station 104 and AP 128 are depicted as providing unlicensed lower layers 324, while each of AP 128, IP network 138, and UNC 140 provide appropriate access layers 326. Typically, access layers 326 will include conventional Ethernet PHY and MAC layers (IEEE 802.3), although this is not limiting.

As shown in Figures 3A and 3B, the unlicensed layers lower layers 324 will depend on whether the unlicensed radio link uses Bluetooth signaling or IEEE 802.11 signaling. The Bluetooth lower layers depicted in Figure 3B correspond to the mobile station architecture of Figure 2A, and include a Bluetooth baseband layer 210, an L2CAP layer 212, and a BNEP layer 213. Meanwhile, the 801.11 lower layers shown in Figure 3C correspond to the mobile station architecture of Figure 2B, and include a 802.11 PHY layer 218 and in 802.11 MAC layer 220.

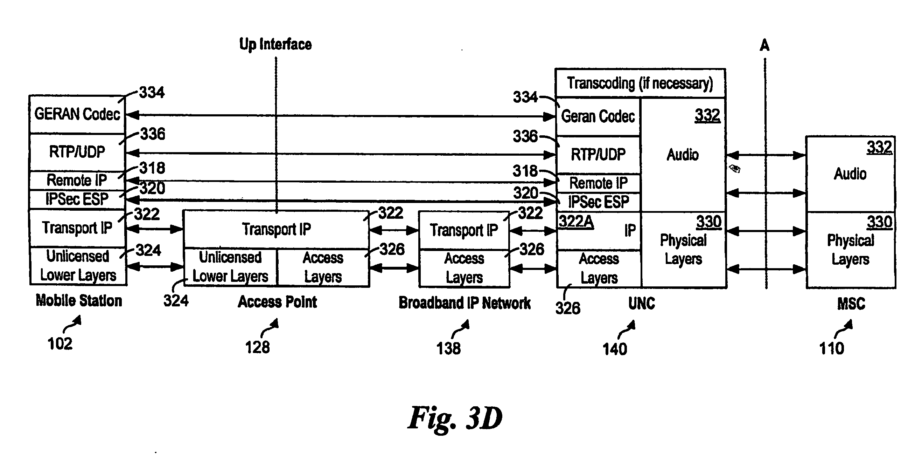

Figure 3D illustrates the Up CS domain voice bearer protocol architecture in support of GSM voice transmission, according to one embodiment. In addition to the like named and referenced components common to the architectures of Figure 3D and 3C, facilities are provided for supporting GSM voice transmission. For the MSC 110, these components include conventional components for supporting GSM voice transmissions, and are depicted as physical layers 330 and audio 332, with similar components being deployed in UNC 140. Each of mobile station 102 and UNC 140 now include a GERAN (GSM Edge Radio Access Network) codec 334 and an RTP/UDP layer 336.

Under the architecture of Figure 3D, audio flows over the Up interface according to the RTP framing format defined in RFC 3267 and RFC 3551. When operating in UMA mode, support for AMR FR as specified in TS 26.103 is supported. Other codecs may also be supported, such as G.711.

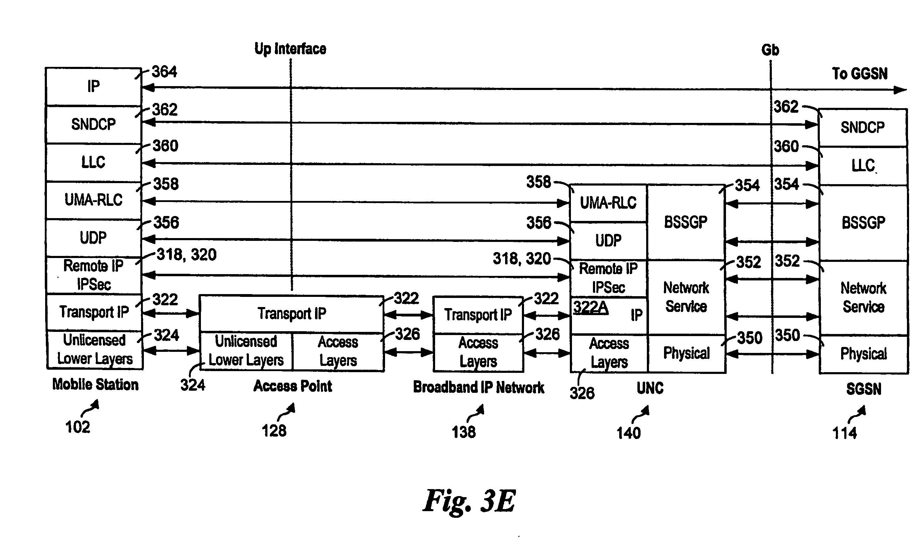

Figure 3E illustrates the Up GPRS user plane protocol architecture, according to one embodiment. The Up GPRS user plane protocol architecture effectively enables the tunneling of GPRS signaling and data packets through the UNC 140 utilizing the unlicensed spectrum, thus supporting a tunneling function for packet-switched traffic between the mobile station 102 and SGSN 118.

As illustrated in Figure 3E, each of the UNC 140 and SGSN 114 employ conventional facilities for supporting GPRS signaling and data packets, including a physical layer 350, a network service layer 352, and a BSSGP layer 354. Each of mobile station 102 and UNC 140 include a UDP layer 356 and a UMA-RLC layer 358. Each of mobile station 102 and SGSN include an LLC layer 360 and an SNDCP layer 362. Mobile station 102 also includes an IP layer 364.

Under the architecture of Figure 3E, GPRS LLC PDUs carrying data, and higher layer protocols, are carried transparently between the mobile station 102 and SGSN 114. This allows the mobile station to derive all GPRS services in the same manner as if it were in a GERAN BSS. All existing GPRS applications and MMI in mobile station 102 are unchanged. LLC PDUs are carried over UMA-RLC layer 358 from mobile station 102 to UNC 140, which relays the PDUs over to SGSN 114 using BSSGP messaging. The UMA-RLC layer 358 runs directly over the UDP layer 356 to leverage the IP bearer service.

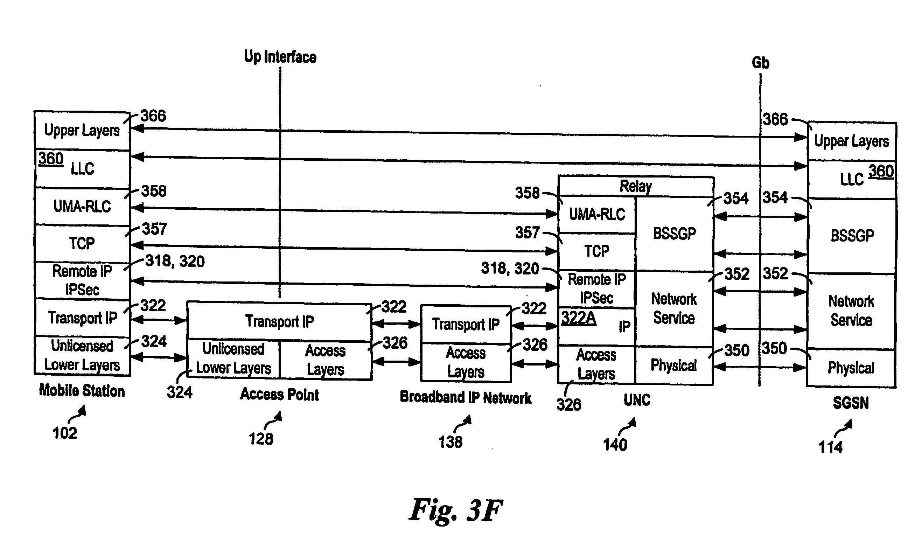

Figure 3F illustrates the Up protocol architecture in support of GPRS Signaling, according to one embodiment. Under this architecture, the GPRS LLC PDUs for signaling on higher layer protocols (including upper layers 366) are carried transparently between MS 102 and SGSN 114. This allows the MS to obtain all GPRS services in the same ways as if it were connected to a GERAN BSS. The GPRS-RLC protocol is replaced with an equivalent (from the upper layer perspective) UMA-RLC protocol. Reliability is ensured by TCP layer 357. As in a GERAN BSS, the UNC, acting like a BSC, terminates the UMA-RLC protocol and inter-works it to the Gb-interface using BSSGP.

As noted above, the mobile station may be, for example, a wireless phone, smart phone, personal digital assistant, or mobile computer. The mobile station may also be, for example, a fixed wireless device providing a set of terminal adapter functions for connecting Integrated Services Digital Network (ISDN) or Plain Old Telephone Service (POTS) terminals to the wireless system..

Other terminal adapter types than those listed above may be employed with embodiments of the present invention. For example: (1) a terminal adapter that supports cordless telephones rather than POTS phones; (2) a terminal adapter that supports standard Session Initiation Protocol (SIP) telephones; and (3) a terminal adapter that also integrates a corded handset and user interface, such as one would find on a desk phone. In each case, the invention described herein describes how these terminal adapter functions can be connected to the wireless system via the unlicensed network.

The use of other standard Bluetooth capabilities together with embodiments of the present invention is possible. For example, there is a Bluetooth standard capability called "SIM Access Profile" that allows one Bluetooth device (*e.g.*, an embedded cell phone subsystem in a car) to access the SIM that is in another Bluetooth device (*e.g.*, the user's normal cell phone), allowing the first device to take on the "personality" associated with the SIM (*i.e.*, that of the user's normal cell phone). The embodiments described above could make use of this standard capability to give the terminal adapter-attached devices (*e.g.*, a POTS phone) the personality of the user's cell phone.

### MOBILITY MANAGEMENT

The UNC 140 provides functions equivalent to that of a GSM BSC, and as such controls one or more (virtual) UMA cells. In one embodiment, there may be a single UMA cell per UNC and, in an alternative embodiment, there may be one UMA cell per access point connected to a UNC. The latter embodiment may be less desirable due to the large number of APs expected to be used, so the UMA architecture permits flexible groupings of APs into UMA cells. Each UMA cell may be identified by a cell global identifier (CGI), with an unused absolute radio frequency channel number (ARFCN) assigned to each UMA cell. Each UMA cell may be mapped to a physical boundary by associating it with specific GSM location areas served by the MSC. GSM cells within the location areas mapped to a UMA cell are configured with ARFCN-to-CGI mappings for that UMA cell. Further, this ARFCN may be advertised in the BA list by the GSM cells to permit handovers. Note that UMA cells may use the same location area identifiers (LAI) as existing GSM cells, or a new LAI may be used for UMA cells. The latter is useful in reducing paging in GSM cells when a mobile station is known to be registered via an INC. The above discussion applies equally to GPRS routing areas and routing area identifiers (RAIs).

### UMA CPE ADDRESSING

Customer premise equipment (CPE) may include the mobile station and the access point (AP) through which the mobile station may access the UNC for UMA service. UMA CPE addressing parameters may include the parameters described below.

The UMA CPE addressing includes the international mobile subscriber identity (IMSI) associated with the SIM in the mobile equipment as a parameter. The IMSI is provided by the UMA mobile station to the UNC when it requests UMA service via the Up interface to the UNC. Unlike the GSM BSC, the UNC manages a context for each mobile station that is operating in UMA mode. Therefore, the UNC maintains a record for each served mobile station. For example, IMSI may be used by the UNC to find the appropriate mobile station record when the UNC receives a BSSMAP paging message.

The UMA CPE addressing includes the address associated with the unlicensed interface in the mobile equipment (*e.g.*, 802.11 MAC address) as a parameter. This identifier may be provided by the UMA mobile station to the UNC when it requests UMA service via the Up interface. The UNC may use this address as an alternative to the IMSI to limit the transfer of the IMSI over the Up interface and to assist in the routing of messages.

The UMA CPE addressing also includes the temporary logical link identifier (TLLI) assigned to the mobile station by the serving GPRS support node (SGSN) as a parameter. This identifier may be provided via standard Gb-interface procedures. The UNC may track this address for each served mobile station to support GSM Gb-interface procedures (*e.g.*, so that downlink GPRS packets may be routed to the correct mobile station).

The UMA CPE addressing also includes the access point ID (AP-ID) as a parameter. The AP-ID may be the MAC address of the unlicensed mode access point through which the mobile station is accessing UMA service. This identifier may be provided by the UMA mobile station to the UNC when it requests UMA service via the Up interface. The AP-ID may be used by the UNC to support location services (*e.g.*, enhanced 911 service) to the user based on the AP from which the service is being accessed. The AP-ID may also be used by the service provider to restrict UMA service access only to authorized APs.

Other CPE addressing parameters that may be used depend on the security requirements of the Up interface (*e.g.*, the need to manage UMA mobile station IP addresses for message routing via tunneled IPSec connections, or the need to manage local credentials assigned to the mobile station by the UNC).

### UMA Cell Identification

In order to facilitate the mobility management functions in GSM/GPRS, the coverage area may be split into logical registration areas called location areas (for GSM) and routing areas (for GPRS). Mobile stations may be required to register with the network each time the serving location area (or routing area) changes. One or more location areas identifiers (LAIs) may be associated with each visited location register (VLR) in a carrier's network. Likewise, one or more routing area identifiers (RAIs) may be controlled by a single SGSN.

In one embodiment, a GSM cell is identified within the location or routing area by adding a cell identity (CI) to the location or routing area identification. The cell global identification (CGI) is the concatenation of the location area identification and the cell identity. In one embodiment, the cell identity is unique within a location area.

### An Example UMA Approach to Cell Identification

One example of a UMA cell identification approach is described below. In this embodiment, a single UNC provides service for one or more UMA location areas and one or more UMA routing areas, and each UMA location area (or routing area) is distinct from, or the same as, the location area (or routing area) of the overlapping GSM cell. A UMA cell is identified within the UMA location or routing area by adding a cell identity (CI) to the location or routing area identification. The UMA cell global identification (UMA-CGI) is the concatenation of the location area identification and the cell identity. In one embodiment, a UMA cell may be a pre-defined partition of the overall UMA coverage area identified by a UMA-CGI value. Note that cell identification, like UMA information, may be transparent to the AP, such that the AP is not aware of its associated UMA-CGI value. The UMA components (*e.g.*, mobile station and UNC) may support the ability to partition the overall UMA coverage area.

A partitioning method may include implementing a one-to-one or a many-to-one correspondence between GSM cell identity and UMA cell identity. Given the identification of a preferred GSM cell in a particular area, it may be possible to determine the corresponding UMA cell identity based, for example, on UNC provisioning. An example of a one-to-one relationship is mapping a GSM cell to a UMA cell. An example of a many-to-one relationship is mapping a GSM location area (and associated GSM cells) to a UMA cell.

When a UMA mobile station connects to the UNC for UMA service, it sends the CGI value and (optionally) a path loss criterion parameter (C1) of the current GSM camping cell, as well as the neighbor cells, to the UNC. The UNC maps the GSM camping cell's CGI value to a corresponding UMA cell's CGI value based on mapping logic provisioned in the UNC. This may be a one-to-one mapping (*e.g.*, if there is one UMA cell per GSM cell) or a many-to-one mapping (*e.g.*, if there is one UMA cell per GSM location area). If no GSM coverage is available in the UMA service area, the UNC may assign the mobile station to a default "no GSM coverage" UMA cell. A single UNC may serve one MSC. This does not preclude UNC embodiments that combine multiple UNC "instances," as defined above, in a single device (for example, a UNC that servers multiple MSCs). Each UNC may also be assigned a unique "UMA-Handover-CGI" value used for GSM-to-UMA handover purposes. For example, this may be the value provisioned in the GSM RAN BSC's ARFCN-to-CGI tables and in the MSCs (*e.g.*, to point to the UNC).

### UMA Operating Configurations

In one embodiment, at least three UMA operating configurations may be identified. In a common core configuration, the UMA LAI and an umbrella GSM RAN LAI (*e.g.*, that serves the subscriber's neighborhood) may be different, and the network may be engineered such that the same core network entities (*e.g.*, MSC and SGSN) serve both the UMA cells and the umbrella GSM cells. One advantage of this configuration is that subscriber movement between the UMA coverage area and the GSM coverage area does not result in inter-system (*e.g.*, MAP) signaling (*e.g.*, location updates and handovers are intra-MSC).

In a separate core configuration, the UMA LAI and umbrella GSM RAN LAI are different, and the network may be engineered such that different core network entities serve the UMA cells and the umbrella GSM cells. One advantage of this configuration is that engineering of the UMA and GSM networks can be more independent than in the Common Core Configuration.

In a common LAI configuration, the UMA LAI and GSM RAN LAI are the same (*e.g.*, different cells within the same LAI). Advantages of this configuration are that subscriber movement (while idle) between the UMA coverage area and the GSM coverage area may not result in any location update signaling, and that the mobile station can easily switch to GSM mode if UMA mode resources are temporarily unavailable (*e.g.*, to respond to paging). Further details of this and the foregoing separate core configuration are discussed in U.S. Pat. No. 7, 127, 250.

### UMA Registration and Deregistration

In one embodiment, as described above, a UMA registration process does not employ signaling to the PLMN infrastructure and is contained within the UMA system (*i.e.*, between the mobile station and UNC). The UMA registration process may serve at least two purposes. It may inform the UNC that a mobile station is connected through a particular AP and is available at a particular IP address. The UNC may keep track of this information, for example, for mobile-terminated calling. The registration process may also provide the mobile station with the operating parameters associated with the UMA service on the AP. This may be analogous to the use of the GSM broadcast control channel (BCCH) to transmit system parameters to mobile stations in GSM cells. GSM system information message content that is applicable in UMA mode may be delivered to the mobile station during the UMA registration process.

Similarly, a UMA deregistration process may allow the mobile station to explicitly inform the UNC that it is leaving UMA mode, allowing the UNC to free resources that it may have assigned to the mobile station. The UNC may also support implicit UMA deregistration, wherein a secure channel to the mobile station is abruptly terminated.

### UMA Redirection

In one embodiment, as described above, when a UMA mobile station connects to the UNC for UMA service, it may send a CGI value and a path loss criterion parameter (C1) of the current GSM camping cell, as well as the neighbor cells, to the UNC. Using this information, as well as internal database information, the UNC may be able to determine if it is the correct serving UNC for the mobile station, and if it is not the correct serving UNC, to redirect the mobile station to the correct UNC. The correct serving UNC may be the UNC whose UMA service area overlaps the mobile station's umbrella GSM coverage. In one embodiment, the correct serving UNC might be attached to the same MSC as the GSM BSC to which the umbrella GSM cell belongs. In an alternative embodiment, the correct serving UNC might be attached to a different MSC that may hand-over to the MSC that provides umbrella GSM coverage to the mobile station, allowing the UNC to handover calls to and from GSM. It may also enable certain location-based services (*e.g.*, E911 Phase 1) that can be tied to the location of the GSM cell. An internal database used by the UNC may map GSM location areas to serving UNCs and conserve the amount of data that needs to be managed. This database may only need to change when a new UNC or a new GSM location area is added.

If no GSM coverage is available when a mobile station connects to the UNC for UMA service, then, under some instances, the UNC may not reliably determine the location of the mobile station for the purposes of assigning the mobile station to the correct serving UNC (*e.g.*, to enable handover and location-based services). The UNC may permit the operator to determine the service policy in this case (*e.g.*, the operator may provide service to the user with certain limitations, possibly with a user interface indication on the mobile station). Additional details on UMA registration and redirection procedures are provided below.

### UMA Mobile Station Idle Mode Behavior

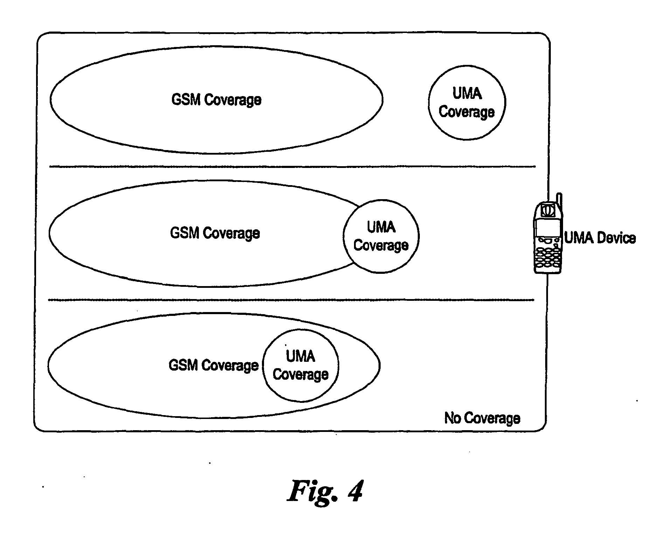

As described above, a UMA device may encounter different radio environments as illustrated in Figure 4. In a first environment, the GSM and UMA coverage areas are completely separate and non-overlapping. In a second environment, the GSM and UMA coverage is partially overlapping. In a third environment, which may be the most common, the UMA coverage is encapsulated within the GSM coverage. A UMA device may power on in any of these environments and further may transition in a number of attached states.

At power on, and when the mobile station is idle and there is no coverage of any type, the mobile station may scan for both GSM and UMA radio coverage. If GSM coverage is detected, then the normal GSM mobility management procedure may be initiated. This condition may apply when no UMA coverage has been detected by the mobile station when GSM coverage is detected, or prior to the completion of the UMA registration process. If UMA coverage is detected, then the UMA mobile station establishes an unlicensed wireless link (*e.g.*, WLAN link) to the AP and monitors signal quality. When the received signal level at the mobile station passes a predefined threshold, the mobile station performs the UMA registration procedure. Based upon the information returned, the mobile station may determine if a full network registration is required, and if so, what type (*e.g.*, GSM or combined GSM/GPRS). This procedure may apply when no GSM coverage exists or when UMA coverage is detected prior to detecting GSM coverage.

When the mobile station is idle in GSM coverage, and there is no UMA coverage, the mobile station may periodically scan for UMA coverage. If UMA coverage is detected, the mobile station may initiate the UMA registration procedure described above.

When the mobile station is idle in UMA coverage and there is no GSM coverage, the mobile station may continue to perform normal GSM PLMN search procedures. If GSM coverage is detected, the mobile station may send the GSM cell information to the UNC for possible UMA redirection purposes as described above. Alternatively, the mobile station may disable normal GSM PLMN search procedures to conserve power.

When the mobile station is idle in UMA coverage, and there is GSM coverage, the mobile station may continue to perform normal GSM cell reselection procedures and may store the identification of the selected GSM cell to speed the transition to GSM mode, if required. Alternatively, the mobile station may disable normal GSM cell reselection procedures to conserve power.

At power off in UMA coverage, a detach indication may be sent by the mobile station to the PLMN via the UMAN (*e.g.*, if required by the PLMN network or normally sent by the mobile station at power off). This indication may be encoded per the current GSM mode of operation (*e.g.*, GSM or GPRS).

The UMA environment may be an IEEE 802.11 environment. In this case, the mobile station periodically performs an active scan for available 802.11 APs. When an AP is discovered, it may be matched against a stored profile of user preferences and security credentials, in which case the mobile station may automatically associate with the AP. The mobile station may enter low-power sleep mode, waking up periodically to measure signal quality for determining when to trigger UMA registration.

The UMA environment may be a Bluetooth environment. In this case, the mobile station previously paired with the Bluetooth AP through which it will access UMA service. Periodically, the mobile station may enter a page scan receive mode, and respond to an AP transmit page to establish a link-level connection. Once a link-level control channel is established, and if the mobile station is not otherwise active, it may enter a low-power Bluetooth state (*e.g.*, park mode) to conserve power. Periodically, the AP may poll the mobile station to allow it to re-enter active-power mode. This periodic traffic may also be used by the mobile station to measure signal quality to determine when to perform the UMA registration procedure.

### UMA Mobile Station Dedicated Mode Behavior

A UMA device engaged in a voice call, a data transaction or a simultaneous voice/data transaction may encounter a transition from GSM coverage to UMA coverage or a transition from UMA coverage to GSM coverage. In one embodiment, when the coverage transitions from GSM to UMA coverage, calls may be handed over transparently between the GSM RAN and the UMAN. In the case of voice, the handover may be accomplished by a handover function. In the case of data, session management controls may provide a common end-user experience to that provided in GPRS. Normal registration actions may occur upon a return to the idle state, if appropriate. When the coverage transitions from UMA to GSM coverage, calls may be handed over transparently between the UMAN and the GSM RAN. In the case of voice, the handover may be accomplished by a handover function. In the case of data, session management controls may provide a common end-user experience to that provided in GPRS.

### Summary of Key Mobility Management Concepts

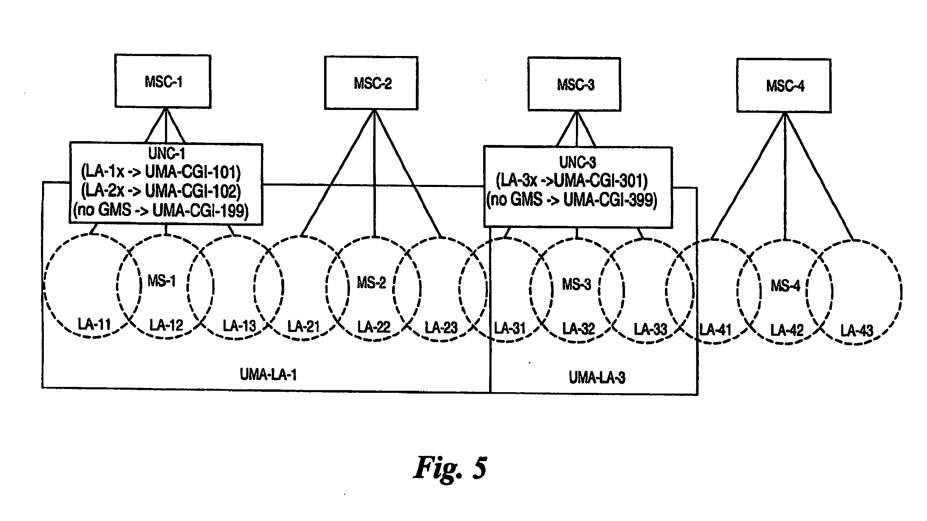

Figure 5 illustrates mobility management functions in one example embodiment. In Figure 5, unlicensed network controller UNC-1 is the serving UNC for the UMA cells associated with GSM location areas LA-11 to LA-23. UNC-1 maps GSM location areas LA-1x to UMA cell UMA CGI-101 and GSM location areas LA-2x to UMA CGI-102. Unlicensed network controller UNC-3 is the serving UNC for the UMA cells associated with GSM location areas LA-31 to LA-33. UNC-3 maps GSM location areas LA-3x to UMA cell UMA CGI-301. Mobile station MS-1 will be in UMA cell UMA-CGI-101 (since GSM LA-1x is mapped to UMA-CGI-101). Mobile station MS-2 will be in UMA cell UMA-CGI-102 (since GSM LA-2x mapped to UMA-CGI-102). Mobile station MS-3 will be in UMA cell UMA-CGI-301 (since GSM LA-3x mapped to UMA-CGI-301). If mobile station MS-4 connects to UNC-1, it will be in UMA cell UMA-CGI-199 (no GSM coverage). If MS-4 connects to UNC-3, it will be in UMA cell UMA-CGI-399 (no GSM coverage). Mobile stations MS-1 and MS-2 may connect to UNC-1 without redirection. If mobile station MS-3 attempts to connect to UNC-1, it may be redirected to UNC-3.

### UMA Radio Resource (URR) Messaging and Message Formats

In accordance with aspects of the present invention, details of UMA Radio Resource (URR) messaging and corresponding message formats to support and manage mobility of mobile stations are now disclosed. The particular format of each message is exemplary, and the formats are merely illustrative of information elements that should and/or may be included in a particular implementation, with some of the information elements being optional.

The UMA-RR messages are conveyed over the Up interface using the TCP connection. The UMA-RR message format follows the standard GSM layer 3 message structure defined in GSM04.07. Each message consists of the following elements:
*1. UMA-RR protocol discriminator -* to ease the interworking with the GSM RR protocol, in one embodiment the UMA-RR protocol reuses the same protocol discriminator as the GSM RR, which is the binary sequence of 0110 for bits 3 to 0 of the first octet of every UMA-RR message. It is noted that this is merely exemplary, as other sequences may be used, depending on the particular implementation.
*2. Skip Indicator -* In one embodiment, Bits 5 to 8 of the first octet of every UMA-RR message contains the skip indicator. An UMA-RR message received with skip indicator other than 0000 shall be ignored. The UMA-RR entity shall always encode the skip indicator as 0000.
*3. Message Type -* the message type IE (information element) and its use are defined in GSM04.07. The UMA-RR message types for one embodiment are listed in Table 1 below.
*4. UMA-RR Connection Indicator (UCI) -* The UCI is used to explicitly indicate the first message on the UMA-RR connection, versus subsequent messages on the connection. This allows the MS and the UNC to synchronize their respective UMA-RR connection states.
i. The MS normally sets UCI to the value '1' to indicate that the message is the first on the new UMA-RR connection.
ii. However, if the UMA connection is for an emergency call, the MS sets UCI to the value '9'. This allows the UNC to give priority to emergency call-related UMA-RR connection requests.
iii. For all other messages associated with the UMA-RR connection, the MS sets UCI to the value '0'.
iv. For example, if the MM sublayer in the MS requests a new UMA-RR connection and then sends a CM-SERVICE-REQUEST message, the UMA-RR entity in the MS sets UCI=1. If the MM sublayer reuses an existing UMA-RR connection to send the CM-SERVICE-REQUEST message, the UMA-RR entity in the MS sets UCI=0. The UCI is used to indicate the implicit allocation of resources for a UMA-RR session.
*5. Other information elements,* as required.
i. The Presence column indicates whether an information element is mandatory ("M"), optional ("O") or conditionally present ("C").
ii. The Format column indicates how the IE is formatted: "TLV" for tag-length-value format, "LV" for length-value and "V" for value only. The tag for the IE is also referred to as the Information Element Identifier (IEI). Mandatory information elements use "V" or "LV" format, depending on whether they are fixed or variable length. Optional and conditional information elements always use "TLV" format.
*5. Length Indicator.* In one embodiment, a separate *Length Indicator* IE is used to specify the length of a given message. In another embodiment, the underlying transport layer is used to provide a length indication for each message. Accordingly, a separate Length Indicator IE is not included in this message format. Both types of formats are illustrated by the URR messages disclosed herein.

**TABLE 1**

| **MESSAGE NAME** | **MESSAGE TYPE** |
|---|---|
| URR REGISTER REQUEST | 0011 0011 (0x33) |
| URR REGISTER ACK | 0011 0110 (0x36) |
| URR REGISTER REJECT | 0011 0111 (0x37 |
| URR ACTIVATE CHANNEL | 0010 1110 (0x2E) |
| URR ACTIVATE CHANNEL ACK | 0010 1001 (0x29) |
| URR ACTIVATE CHANNEL FAILURE | 0010 1111 (0x2F) |
| URR ACTIVATE CHANNEL COMPLETE | 0010 1010 (0x2A) |
| URR HANDOVER REQUIRED | 0001 0001 (0x11) |
| URR HANDOVER COMMAND | 00101011 (0x2B) |
| URR HANDOVER COMPLETE | 0010 1100 (0x2C) |
| URR HANDOVER FAILURE | 0010 1000 (0x28) |
| URR HANDOVER ACCESS | 0010 1101 (0x2D) |
| URR RR RELEASE | 0000 1101 1 (0x0D) |
| URR RR RELEASE COMPLETE | 00001111 (0x0F) |
| URR PAGING REQUEST | 0010 0001 (0x21) |
| URR PAGING RESPONSE | 0010 0111 (0x27) |
| URR CLASSMARK CHANGE | 0001 0110 (0x16) |
| URR CLASSMARK ENQUIRY | 0001 0011 (0x13) |
| URR RR CLEAR REQUEST | 00111111 (0x3F) |
| URR DEREGISTER | 0011 1011 (0x3B) |
| URR UPLINK QUALITY INDICATION | 0010 0110 (0x26) |
| URR REGISTER UPDATE UPLINK | 0011 1100 (0x3C) |
| URR REGISTER UPDATE DOWNLINK | 00111101 (0x3D) |

### Registration Messages and Messages Formats

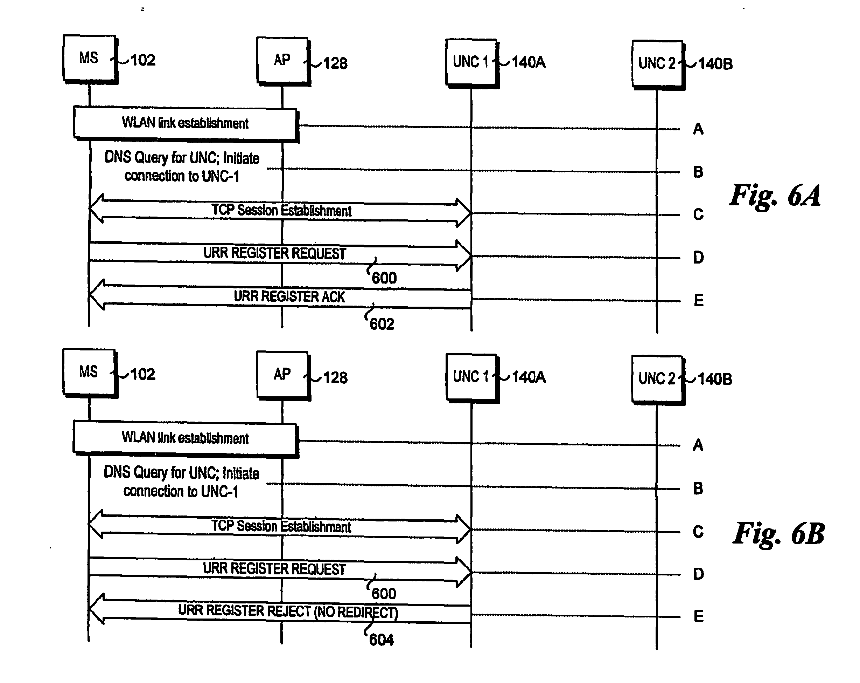

Figures 6A-C show examples of sequences of messages that are passed between an MS and a UNC (via an AP connected therebetween) under various registration scenarios. Messages and associated signals passing between the different elements are shown as horizontal arrows with arrowheads connecting the elements of the communication systems that are involved. When the arrow passes across an element and no arrowhead is shown, then this element functions as a pass through. The particular elements of the system architecture of Figure 1 that are involved in Figures 6A-C are, from left to right, a mobile station (*e.g.* MS 102), an access point (*e.g.,* WLAN AP 128), a first UNC (*e.g.,* UNC-1 (UNC 140A)) and a second UNC (*e.g.,* UNC-2 (UNC 140B)).

Prior to the registration process, various operations are performed to establish a connection between MS 102 and AP 128, and then to establish a connection between MS 102 and UNC 140. At step A of Figure 6A, the MS 102 comes into the coverage range of AP 128 and establishes a wireless link with the AP. For example, this wireless link may be a WLAN connection using unlicensed frequencies under the IEEE 802.11 or Bluetooth protocols. At step B, the MS looks for a UNC to establish a connection with. This may be done by performing a DNS (Domain Name System) query for a UNC. This initiates a connection to the first UNC's IP address. The MS may select the first UNC because it is the last UNC IP address that it used or it may be a default UNC or it may be a home UNC that the MS is assigned to for initial registrations, or it may be selected from a cache of connected UNCs indexed by the AP and CGI. At step C, the UNC and the MS establish a secure TCP connection. Note that IPSec security procedures between the MS and UNC are not shown in Figures 6A-C.

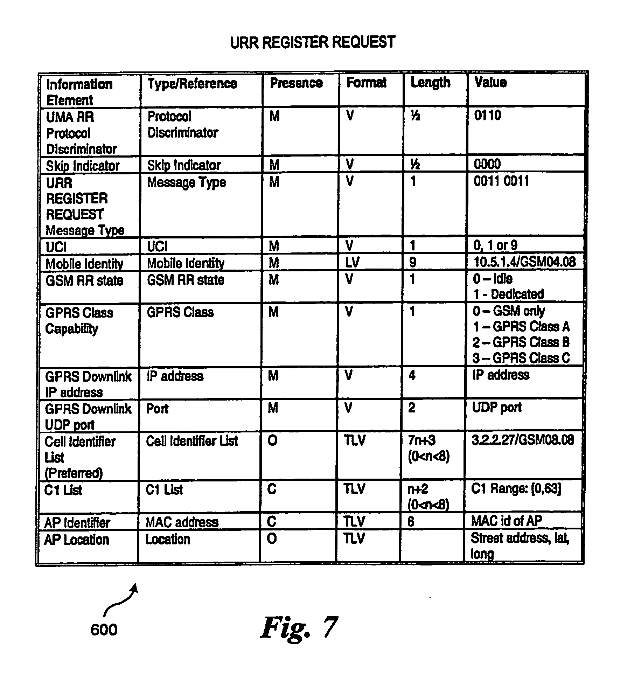

At step D, the MS sends a request for registration embodied as a UMA URR-REGISTER REQUEST message 600 to the UNC. One embodiment of an URR REGISTER REQUEST message 600 is shown in Figure 7. For illustrative purposes, each message format illustrated herein includes an IEI (Information Element Identifier) column, an Information Element column, a Type/Reference column, a Presence column, a Format column, a Length Column, and a Value column. It is noted that the actual messages will include a value that identifies the message type, along with appropriate IE values in accordance with each particular message format. Also, as with each of the messages discussed herein, URR REGISTER REQUEST message 600 includes a *UMA RR protocol Discriminator* IE, a *Skip Indicator* IE, a *Message Type* IE (URR REGISTER REQUEST in this instance), and *UCI* IE. As used herein, these four IEs are referred to as "basic" IEs to indicate they are included in each message format.

In addition to the basic IEs, URR REGISTER REQUEST message 600 includes a *mobile identity* IE, a *GSM RR State* IE, a *GPRS Class Capability* IE, a *Cell Identifier List* IE, a *C1 List* IE, an *AP Identifier* IE, and an *AP Location* IE. The *mobile identity* IE is mandatory and uses IMSI or IMEI if IMSI is not available. The *GSM RR State* IE is included to indicate the current GSM RR entity state. The *GPRS Class Capability* IE is included to indicate the GPRS Class capability of the MS. The *Cell Identifier List* IE is included if valid GSM cell information is available to the UMA RR entity. Within this IE, the Cell Identification Discriminator field shall be 0000 indicating the Cell Global Identification (CGI) format is used to identify the cells. The *C1 List* IE is present only if the "cell identifier list" IE is present. It contains the path loss criterion parameter C1 of each cell in the "Cell Identifier List" IE. The AP Identifier IE contains the MAC address of the unlicensed interface of the AP through which the MS is registering with the UNC. If the AP location is available, the MS can send corresponding information identifying the location of the AP via the AP Location IE, such as street address, latitude and longitude, *etc.* In addition to the foregoing registration content, the URR REGISTER REQUEST message may further include a reason for the connection and information about transmitting base stations that are within range (not shown).

In a GSM system, this information is labeled Cell-Info and includes CGI and (optionally) C1 values. In one embodiment, only a single CGI is reported by the MS, representing the GSM cell that the MS has selected using its normal GSM cell selection procedures. This single cell has been selected by the MS to be the "best" GSM cell. Typically, to develop such values, the MS will scan certain designated frequencies to find broadcast channel (BCH) transmissions. The BCH will identify the transmitting base station and contain information about random access and traffic channels that are used by the particular base station. The MS can record the base station identities and measure the quality of the BCH signal as it is received. In GSM systems, the RXLEV (Received Signal Level) is typically measured but other quality measures may be used instead of, or in addition to the RXLEV, including signal to noise ratios, bit error rates, RSSI (Received Signal Strength Indicator) and signal propagation delays.

The UNC evaluates the received information about location and selects the appropriate UNC for the MS. This selection may be maintained for as long as the MS remains connected to the same AP. As mentioned above, there are a variety of different ways to select the appropriate UNC. In one embodiment the UNC maps the identification of the AP to a location, to a corresponding MSC and then to a corresponding UNC. In yet another embodiment, the UNC has no location information about base stations or the AP but it has a prior registration from the AP that included location information and selects a UNC on that basis.

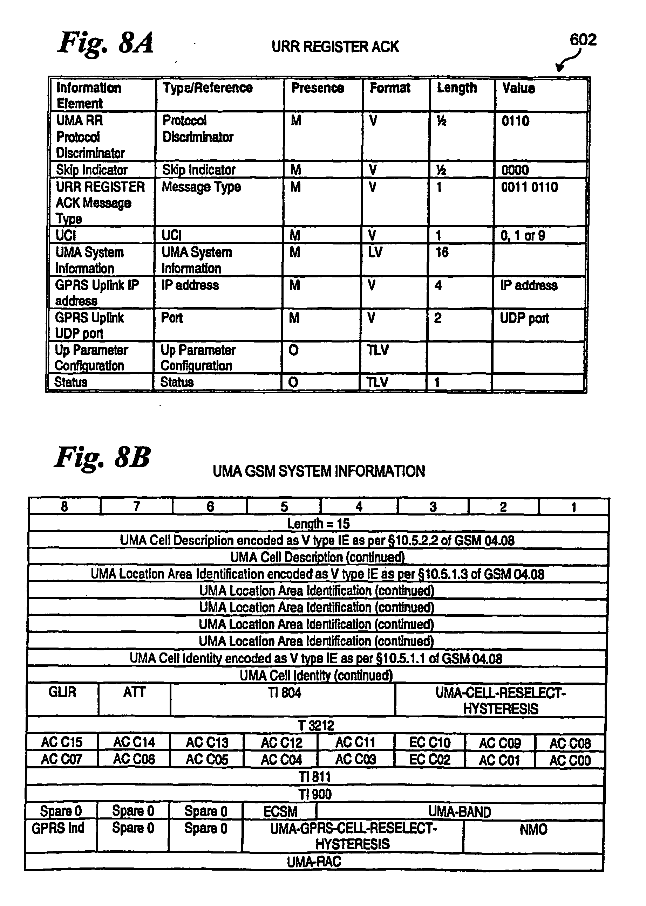

In the simplest case, the registration request will be honored by the UNC to which it was submitted by having that UNC return a URR REGISTRATION ACK(nowledgement) message 602. Optionally, the message is referred to as a URR REGISTRATION ACCEPT message. One embodiment of a URR REGISTRATION ACK message 602 is shown in Figure 8A.

The information elements of URR REGISTRATION ACK message 602 includes the basic IEs (*e.g., Protocol Discriminator, Skip Indicator, Message Type,* and *UCI),* as well as a *UMA System Information* IE, a *GPRS Uplink IP address,* a *GPRS Uplink UDP port,* an *Up Parameter Configuration* IE, and a *Status* IE. Details of the formatting of one embodiment of the *UMA System Information IE* are shown in Figure 8B. Details of the various fields shown in the UMA System Information IE of Figure 8B are shown below.

**GLIR - GSM Location Information Request**

| | |
|---|---|
| 0 | GSM location information not requested |
| 1 | GSM location information requested |

**ATT - Attach/detach allowed**

| | |
|---|---|
| 0 | IMSI attach/detach not allowed in UMA cell |
| 1 | MSs in the UMA cell shall apply IMSI attach and detach procedure |

**TI804 - Timer value**

| | |
|---|---|
| 000 | 0 second, *i.e.,* immediate access mode switching upon receipt of UMA-LINK-DETACH message or link loss |
| 001 | 5 seconds |
| 010 | 10 seconds |
| 011 | 15 seconds |
| 100 | 20 seconds |
| 101 | 25 seconds |
| 110 | 30 seconds |
| 111 | 35 seconds |

**UMA-CELL-RESELECT-HYSTERESIS**

| | |
|---|---|
| 000 | 0dB RxLev hysteresis |
| 001 | 2dB RxLev hysteresis |
| 010 | 4dB RxLev hysteresis |
| 011 | 6dB RxLev hysteresis |
| 100 | 8dB RxLev hysteresis |
| 101 | 10dB RxLev hysteresis |
| 110 | 12dB RxLev hysteresis |
| 111 | 14dB RxLev hysteresis |

### T3212 - Periodic Location Update timer

The T3212 timout value field is coded as the binary representation of the timeout value for periodic updating in decihours.
Range: 1 to 255
The value 0 is used for infinite timeout value, *i.e.* periodic updating shall not be used within the UMA cell

### EC - Emergency Call Allowed

| | |
|---|---|
| 0 | Emergency call allowed in the UMA cell to all MSs |
| 1 | Emergency call not allowed in the UMA cell except for the MSs that belong to one of the classes between 11 to 15 |

### AC CN - Access Control Class N

For a MS with AC C = N access is not barred if the AC CN bit is coded with a '0'; N = 0, 1, .. , 9, .. , 15

### TI 811- UMA Channel Activation timer

The TI 811 value field is coded as the binary representation of the timeout value in 100ms resolution.
Range: 1- 255 (100 ms to 25.5 sec)

### TI 900 - GSM to URR HANDOVER supervision timer

The TI 900 value field is coded as the binary representation of the timeout value in 100ms resolution.
Range: 11 - 255 (1.1 sec to 25.5 sec)

### UMA-BAND

| | |
|---|---|
| 0000 | P-GSM 900 |
| 0001 | E-GSM 900 |
| 0010 | R-GSM 900 |
| 0011 | DCS 1800 |
| 0100 | PCS 1900 |
| 0101 | GSM 450 |
| 0110 | GSM 480 |
| 0111 1 | GSM 850 |

All other values are reserved

ECSM - Early Classmark Sending Mode, control the "early classmark sending" behavior

| | |
|---|---|
| 0 | Hold the URR CLASSMARK CHANGE message until the first downlink message is received |
| 1 | Send the URR CLASSMARK CHANGE message as early as possible after UMA RR connection is established |

### GPRS Ind - GPRS Service Availability

| | |
|---|---|
| 0 | GPRS service not available in the UMA cell |
| 1 | GPRS service supported in the UMA cell |

### UMA-GPRS-CELL-RESELECT-HYSTERESIS

| | |
|---|---|
| 000 | 0dB RxLev hysteresis |
| 001 | 2dB RxLev hysteresis |
| 010 | 4dB RxLev hysteresis |
| 011 | 6dB RxLev hysteresis |
| 100 | 8dB RxLev hysteresis |
| 101 | 10dB RxLev hysteresis |
| 110 | 12dB RxLev hysteresis |
| 111 | 14dB RxLev hysteresis |

NMO - Network Mode of Operation. This field is meaningful only if "GPRS Ind" flag is set to 1

| | |
|---|---|
| 00 | Network Mode of Operation I |
| 01 | Network Mode of Operation II |
| 10 | Network Mode of Operation III |
| 11 | Reserved |

UMA-RAC - Routing Area Code of the UMA cell, see GSM03.03. This field is meaningful only if "GPRS Ind" flag is set to 1

The *Up Parameter Configuration* IE enables a UNC to configure Up interface parameters such as timers, retry counters, *etc.* The *Status* IE provides an indication from the UNC on whether location services are available (based on knowledge of AP's geographical location). This can be used to trigger an icon or other display on the MS. In one embodiment the possible values are:

| | |
|---|---|
| 0 | Location Services are Available |
| 1 | Location Services are Not Available |

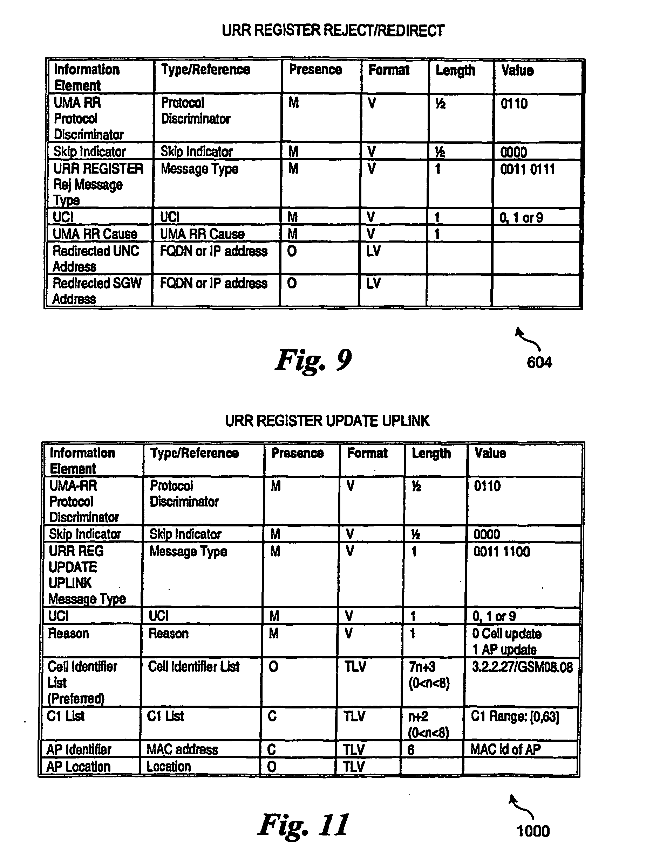

If the network decides to reject the registration from the MS, the UNC will return an URR REGISTER REJECT message 604 to the MS, as depicted in the message sequence shown in Figure 6B. The format for one embodiment of URR REGISTER REJECT message 604 is shown in Figure 9. In addition to the basic IEs, this message includes a *UMA RR Cause* IE, and optional *Redirected UNC Address* IE and *Redirected SGW* (Security Gateway) *Address* IEs. The *RR Cause IE* contains a value that is used to specify a reason for the rejection, such as Network Congestion, AP not allowed, Location not allowed, IMSI not allowed, *etc.*

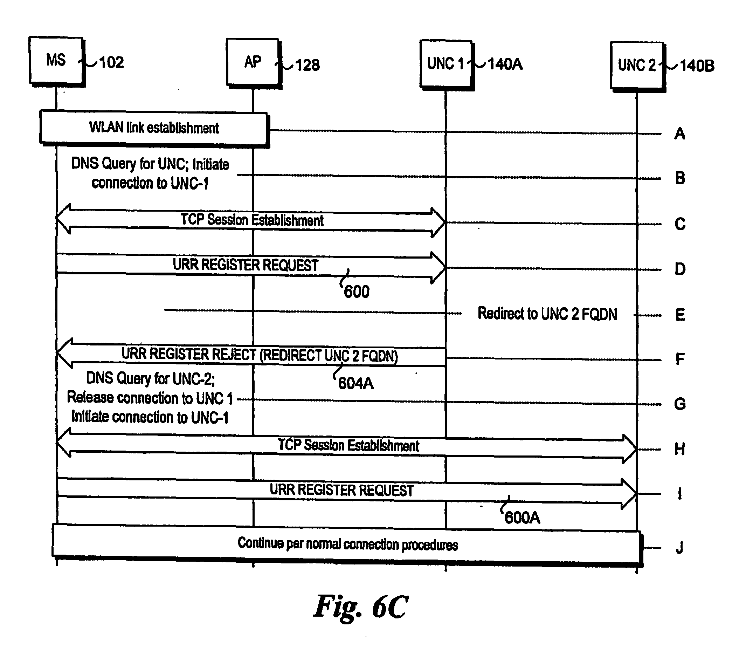

The optional *Redirected UNC Address* IE and *Redirected SGW Address* IEs may be employed for redirection purposes. For example, a registration message sequence that involves UNC redirection is shown in Figure 6C. Redirection may be applicable under various circumstances. For example, the location of a given AP might be moved, such that it is more advantageous to access the network via another UNC. Similarly, an MS may contain information instructing it to access a default UNC based on a "normal" location of a subscriber - if the subscriber location is different, the default UNC may not be appropriate.

Referring to Figure 6C, at step E a determination to redirect the session to UNC 2 is made by the serving UNC (*e.g.,* UNC 1) and/or the network in view of applicable criteria as described above. At step F, UNC 1 acknowledges the registration request and sends a URR REGISTER REJECT message 604A that contains an address for the selected UNC (UNC 2) and/or the address for the security gateway associated with the UNC to MS 102. The address(es) may be in the form of a FQDN (Fully Qualified Domain Name) or in another form, such as an IP address. In another embodiment, a separate URR REGISTER REDIRECT message is used (not shown). Under this embodiment (separate URR REGISTER REJECT and URR REGISTER REDIRECT messages), the URR REGISTER REJECT message does not contain any redirection IEs.

At step G, the MS performs a DNS query for the selected UNC. It may also release the TCP connection to the first UNC (UNC 1) and initiate a connection to the second UNC's IP address or SGW address. Accordingly, at step H, a TCP connection is established between the MS and the new UNC (UNC 2) to which the MS was redirected. At step H, the connection is established between the MS and the second UNC. The IPSec tunnel with the original UNC may be reused or a new one may be established (not shown).

At step I, the MS may send a second registration request message to the second UNC, as depicted by a URR REGISTER REQUEST message 600A. In a URR-REGISTER-REQUEST type of message, a reason field may carry a value for redirection instead of a normal connection. The information in the registration request may cause the new UNC to apply information that it has to further redirect the MS. Because it is closer to the location of the AP, it may have more or better information on the AP, nearby base stations or network resource allocations and may then further redirect the MS. The reason field may be used to inform the MS about the number of redirections. It may be used to limit the total number of redirections that a MS may experience at a single AP to one or two or any other number.

At step J, the connection with the UNC continues along its normal course. This may include registration acknowledgments, call setup and teardown, and any of a variety of different supported voice or data services, including security measures.

### Registration Update

Under various use scenarios, a need to perform a registration update may result. Generally, a registration update procedure may be initiated by an MS (more common) or the network (less common). For example, after an MS has successfully registered to an UNC, the MS may employ a registration update procedure to inform the UNC if the AP (via which the MS is accessing the network) or the overlapping GSM coverage has changed.

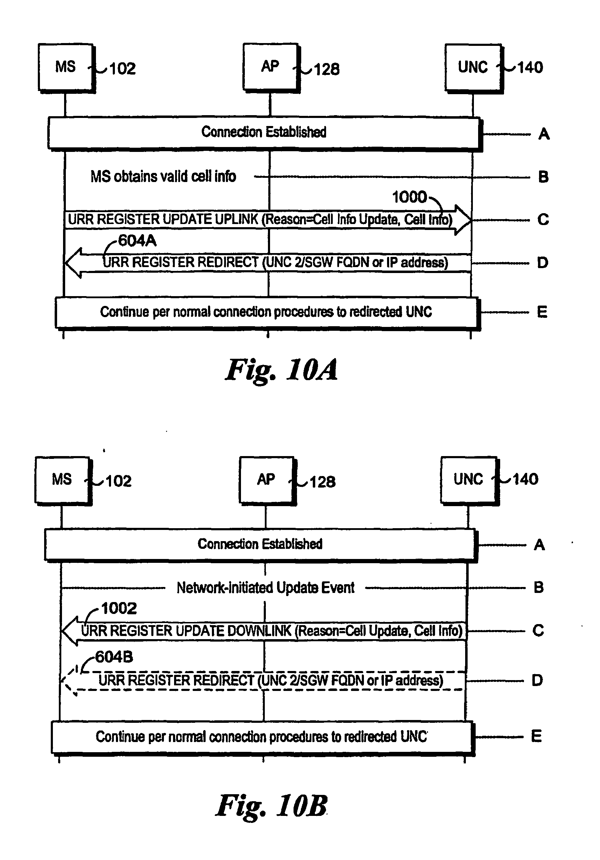

An example of messaging employed to facilitate an MS-initiated registration update is shown in Figure 10A. At step A, MS 102 has established a connection with UNC 140 in the normal manner described above. At step B, the MS obtains valid cell information. For example, the MS receives information for a local GSM cell. At step C, the MS sends a URR REGISTER UPDATE UPLINK message 1000 to the UNC. The URR REGISTER UPDATE UPLINK message is sent by an MS to a UNC to update registration parameters.

Figure 11 shows one embodiment of URR REGISTER UPDATE UPLINK message 1000. In addition to the basic IE's, this message includes a *Reason* IE, a *Cell Identifier List* IE, a *C1 List* IE, an *AP identifier* IE, and an *AP Location* IE. The *Reason* IE is a mandatory IE that specifies whether the reason for the update is due to a cell update or an AP update. A *Cell Identifier List* IE will be included if GSM cell information (available to the UMA RR entity) has changed since the last registration or update. Within this IE, the Cell Identification Discriminator field shall be 0000 indicating the Cell Global Identification (CGI) format is used to identify the cells. The *C1 List* IE is present only if the *Cell Identifier List* IE is present. It contains the path loss criterion parameter C1 of each cell in the *Cell Identifier List* IE. The *AP Identifier* IE will be included if the AP through which the MS is communicating with the UNC has changed since the last registration or update. The AP Identifier is the MAC address of the unlicensed interface of the AP through which the MS is communicating with UNC.

When receiving a URR REGISTER UPDATE UPLINK message, the network may either accept or reject the registration update, or redirect the MS to another UNC. In one embodiment, if there are not any actions to be taken by the UNC (*e.g.,* a change in the access elements for the MS), the UNC simply accepts the registration update parameters with no reply message. In this case, the URR REGISTER UPDATE UPLINK message is merely informative. If the network rejects the registration update, the network sends a URR DEREGISTER message to the MS. Details of a URR DEREGISTER message are discussed below. Additionally, depending on the registration update information that is sent in the message, the UNC may redirect the MS to another UNC using a URR REGISTER REDIRECT message, as depicted by a URR REGISTER REDIRECT message 604A at step D in Figure 10A. In response, normal connection procedures would be established with the new UNC to which the MS was redirected, as shown in step E.

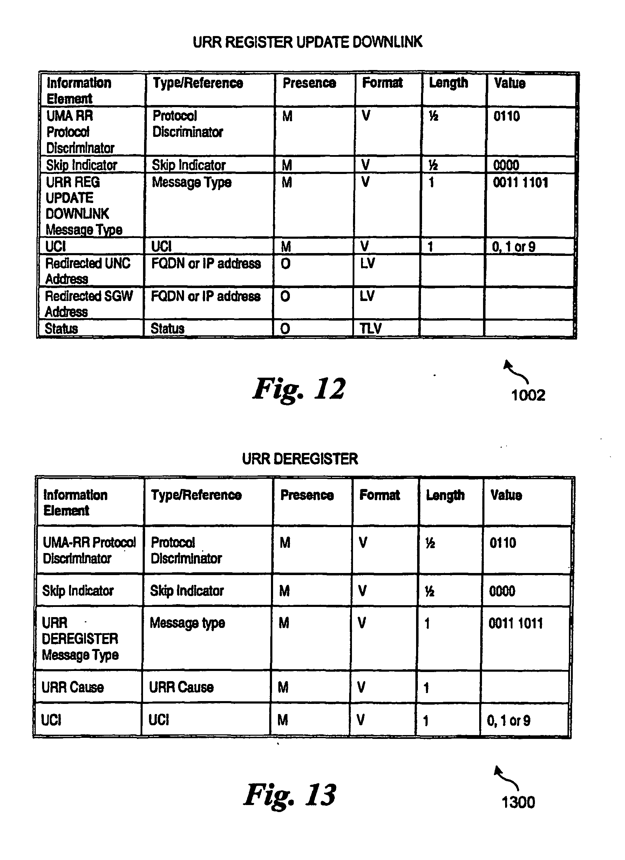

Figure 10B shows various message transfers that may be performed in connection with a network-initiated registration update. As before, at step A MS 102 has established a connection with UNC 140 in the normal manner. At step B, a network-initiated update event occurs. At step C, the UNC sends a URR REGISTER UPDATE DOWNLINK message 1002, one embodiment of which is detailed in Figure 12. The URR REGISTER UPDATE DOWNLINK message 1002 includes a *Redirected UNC Address* IE, a *Redirected SGW Address* IE, and a *Status* IE. The *Status* IE provides an indication from the UNC on whether location services are available (based on knowledge of the AP's geographical location). This can be used to trigger an icon or other display on the MS. Possible values are:

| | |
|---|---|
| 0 | Location Services are Available |
| 1 | Location Services are Not Available |

Under some conditions, it may be advantageous to have an MS be redirected to re-register with a different UNC in view of the updated registration information. If the network decides to redirect the MS to another UNC, it will send a URR REGISTER REDIRECT message to the MS, as depicted by a URR Register Redirect message 604B at step D. At step E, normal connection procedures are performed to establish a connection with the UNC to which the MS is redirected.

### Deregistration

In general, deregistration may be initiated by an MS (*e.g.*, when deregistering an existing connection) or the network via an appropriate UNC. For instance, the MS should attempt to perform a deregister procedure before leaving an AP, which is facilitated by sending a URR DEREGISTER message from the MS to the UNC. Similarly, the UNC may initiate deregistration of the MS at any time by sending a URR DEREGISTER message to the MS.

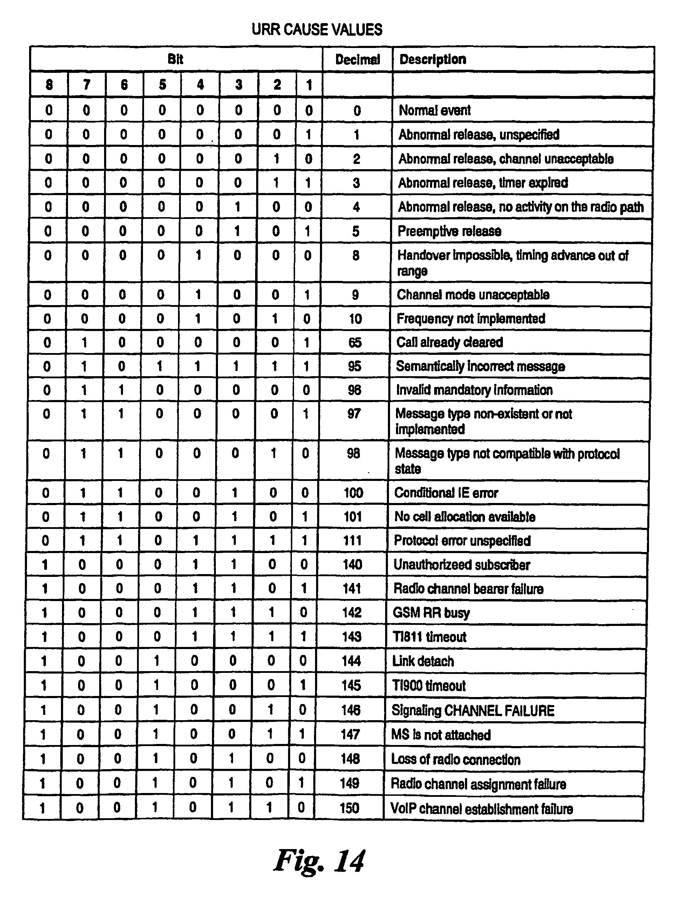

An exemplary URR DEREGISTER message format 1300 is shown in Figure 13, which includes a *URR cause* IE in addition to the basic IEs. A lookup table containing an exemplary set of values for the *URR cause* IE are shown in Figure 14. Based on the URR cause value, a lookup into the URR cause lookup table may be performed to identify the reason for the deregistration

### Channel Activation

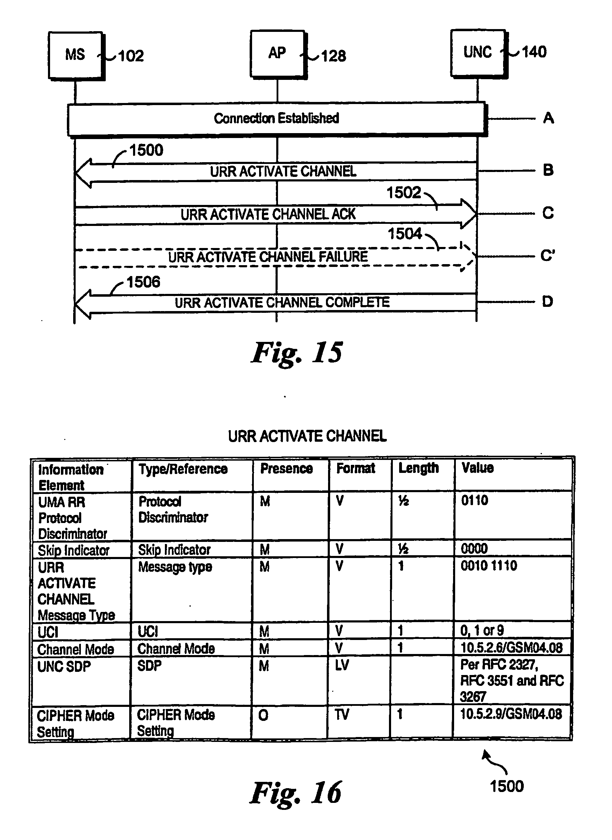

Channel activation is used to establish a voice or circuit switched data bearer channel. Figure 15 shows an exemplary message sequence performed in connection with channel activation. At step A, MS 102 has established a connection with UNC 140 in the normal manner. At step B, the UNC sends an URR ACTIVATE CHANNEL message 1500 to the MS. In response to receiving a URR ACTIVATE CHANNEL message, the MS attempts to establish a corresponding UMA voice bearer channel. If successful, the MS returns a URR ACTIVATE CHANNEL ACK(nowledge) message 1502, as shown at step C. If the UMA voice bearer channel cannot be established, the MS returns a URR ACTIVATE CHANNEL FAILURE message 1504, as shown at step C'. Upon successful activation, a URR ACTIVATE CHANNEL COMPLETE message 1506 is sent by the UNC to the MS to indicate that the established voice channel between the MS and the UNC is now ready for use, as shown at step D.

Figure 16 shows details of one embodiment of a URR ACTIVATE CHANNEL message. In addition to the basic IEs, this message includes a *Channel Mode* IE, a *UNC SDP* IE, and a *CIPHER Mode Setting* IE. In one embodiment, the *Channel Mode* IE specifies the following channel modes:
0000 0001 speech full rate or half rate version 1
0010 0001 speech full rate or half rate version 2
0100 0001 speech full rate or half rate version 3 (AMR version 1)

The *UNC SDP* (Session Description Protocol) IE is used for specifying information used to implement the uplink (from MS to UNC) portion of the voice bearer channel. For example, this information may include the network address (IP address), the transport address (port), the transport protocol (*e.g.,* RTP over UDP), the sample size (*e.g.,* 20 ms) and the payload type (among other things). In one embodiment the format of this IE's values are defined in RFCs 2327, 3551 and 3267. The use of a single IE to contain this information is merely exemplary, as such information may also be provided via separate IEs. The optional *CIPHER Mode Setting* IE appears when the ciphering mode is changed after the MS has switched to the assigned channel. If this information element is omitted, the mode of ciphering is not changed after the channel assignment procedure.

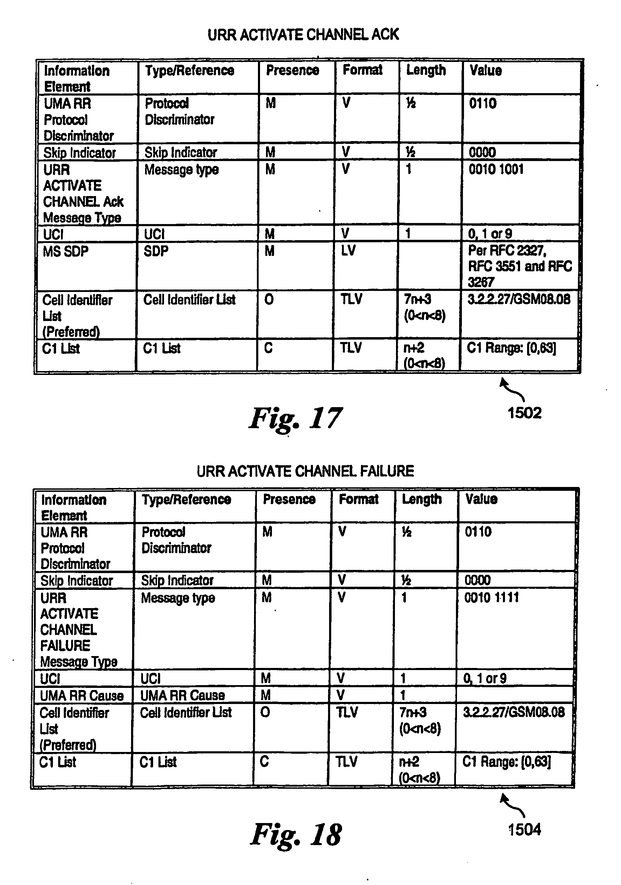

Figure 17 shows one embodiment of a URR ACTIVATE CHANNEL ACK message. In addition to the basic IEs, this message format includes an *MS SDP* IE, an optional *Cell Identifier List* IE, and a conditional *C1 list* IE. The MS *SDP* IE is used for specifying information used to implement the downlink (from UNC to MS) portion of the voice bearer channel. This IE is substantially analogous to the *UNC SDP* IE discussed above, except that the port and address information now pertains to the MS rather than the UNC. The *Cell Identifier List* IE will be included if valid GSM cell information is available to the UMA RR entity. Within this IE, the Cell Identification Discriminator field is set to 0000 to indicate the Cell Global Identification (CGI) format is used to identify the cells. The *C1 List IE* is present only if the *Cell Identifier List* IE is present. It contains the path loss criterion parameter C1 of each cell in the *Cell Identifier List* IE.

Figure 18 shows one embodiment of a URR ACTIVATE CHANNEL FAILURE message. The additional IEs include a *UMA RR Cause* IE, an optional *Cell Identifier List* IE, and a conditional *C1 List* IE. The *UMA RR Cause* IE contains a coded cause of the failure. Meanwhile, the *Cell Identifier List IE* and a conditional *C1 list IE* are the same as above.

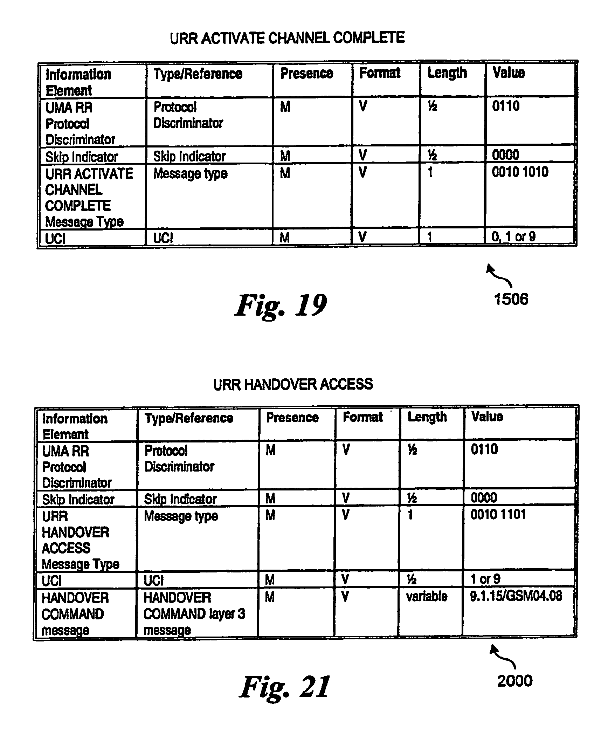

Figure 19 shows one embodiment of a URR ACTIVATE CHANNEL COMPLETE message. As depicted, this message format only contains the basic IEs, wherein the message is identified by its Message Type value.

### Handovers

There are two primary types of handovers supported by the network: Handover to UMAN, and handover from UMAN. During a handover to UMAN, network access to an MS is handed over from licensed-based radio access network (*e.g.*, GERAN) to UMAN network infrastructure. During a handover from UMAN, the MS access is handed over from the UMAN network infrastructure to the licensed-based radio access network.

### Handover to UMAN

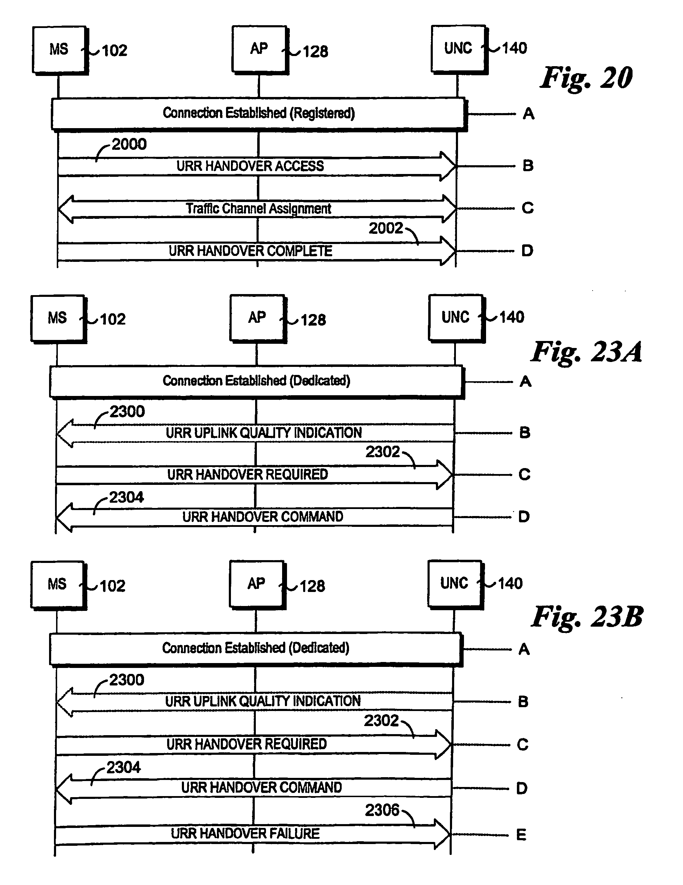

An exemplary message sequence corresponding to a handover to UMAN is shown in Figure 20. Step A represents an existing connection that has previously been established, such as by using the technique shown in Figure 6A. At step B, a URR HANDOVER ACCESS message 2000 is sent from MS 102 to UNC 140 in response to a corresponding handover order made by the licensed network. If non-signaling mode is indicated in the *Channel Mode* IE, the UNC initiates Traffic channel assignment, as depicted at step C. If the traffic channel assignment is successful, the MS will return a URR HANDOVER COMPLETE message 2002 to the UNC, as depicted at step D.

One embodiment of a URR HANDOVER ACCESS message is shown in Figure 21. In addition to the basic IEs, this message format includes a *HANDOVER COMMAND message* IE. This IE contains the complete *HANDOVER COMMAND* layer 3 message (as described below) to provide handover reference used by the UMA Controller for access identification.

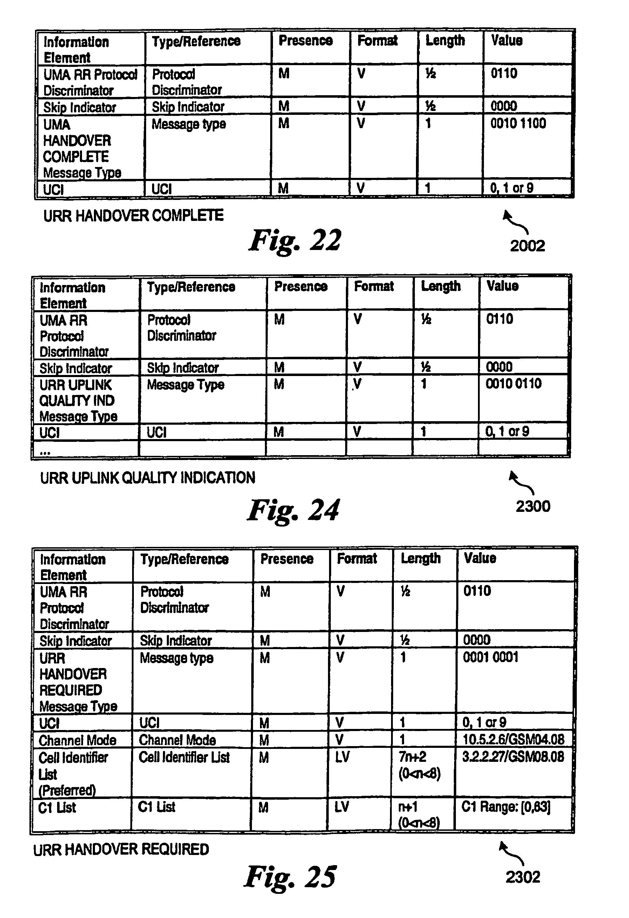

Figure 22 shows one embodiment of a URR HANDOVER COMPLETE message. The message format includes the basic IEs, and is identified by the value of the message type.

### Handover from UMAN

A handover from the UMAN is performed to transfer a connection between an MS and the UMAN to another radio access network (*e.g.*, GERAN). Message sequences corresponding to successful and unsuccessful handovers from UMAN are respectively shown in Figures 23A and 23B. The handover from UMAN procedure begins with a connection established and the MS in a dedicated state, as shown at step A. In response to a URR UPLINK QUALITY INDICATION message 2300 received from the UNC at step B, or if the MS determines a handover is appropriate, the MS sends a URR HANDOVER REQUIRED message 2302 to the UNC at step C. The UNC then sends a URR HANDOVER COMMAND 2304 back to the MS at step D. If the handover from UMAN is unsuccessful, the MS returns a URR HANDOVER FAILURE message 2306, as shown at step E in Figure 23B.

Details of one embodiment of a URR UPLINK QUALITY INDICATION message are shown in Figure 24. The message may include various information indicative of uplink quality of the bearer channel. The particular format of this information is dependent on the particular implementation.

Figure 25 shows details of one embodiment of a URR HANDOVER REQUIRED message. In addition to the standard IEs, this message includes a *Channel Mode* IE, and *Cell Identifier List,* and a *C1 List.* These latter two IEs are the same as discussed above. In one embodiment, the *Channel Mode* IE defines the channel mode as specified by GSM04.08.

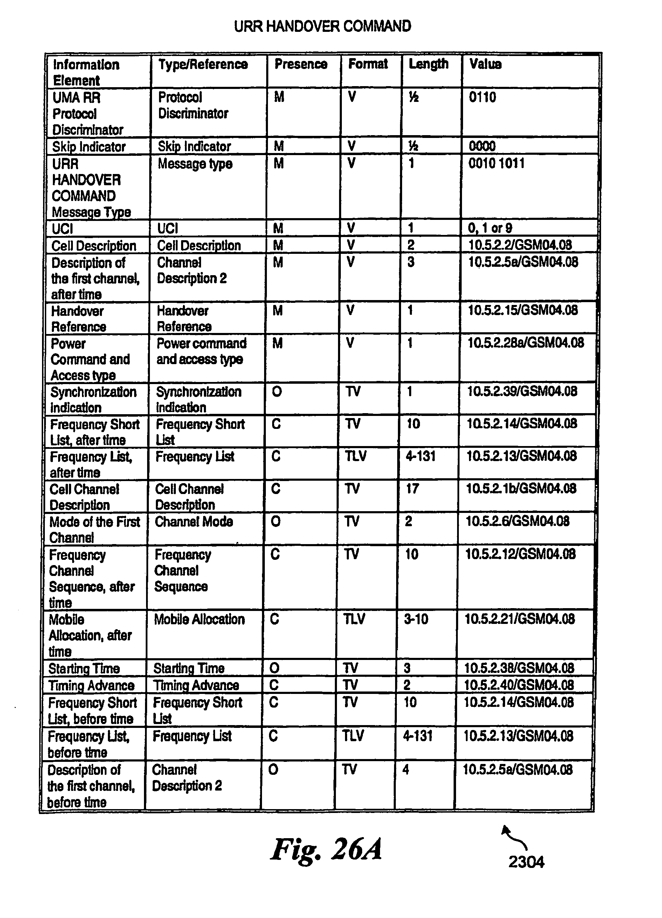

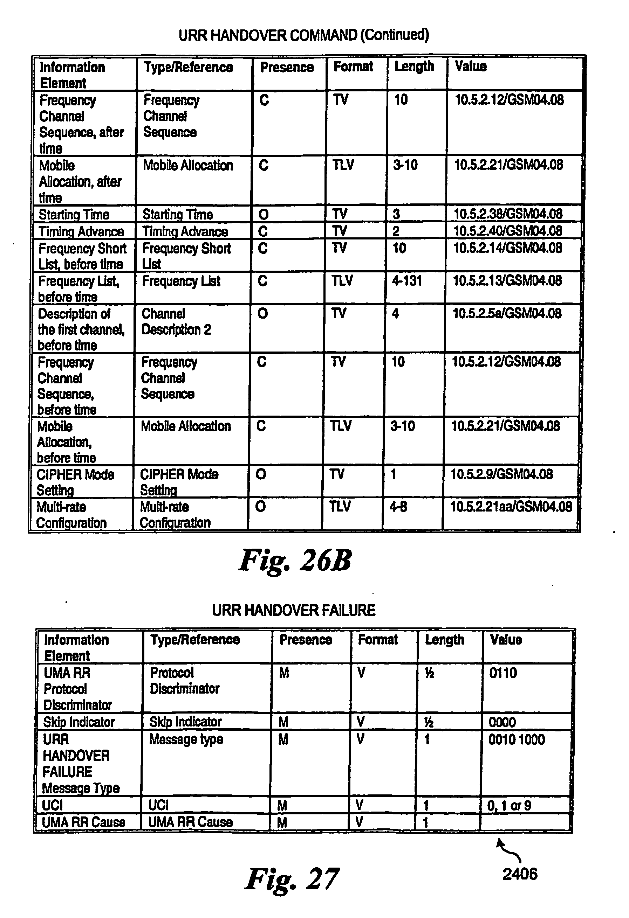

Figures 26A and 26B show details of one embodiment of a URR HANDOVER COMMAND message. This message format is compiled based on the HANDOVER COMMAND message format defined in GSM 04.08/Release 98, with all optional IEs not applicable to the UMA to GSM handover removed. This message format includes a number of IEs in addition to the basic IEs; selected IEs are detailed below.

The *Synchronization Indication* IE is used to identify what type of synchronization is applicable. If this information element does not appear, the assumed value is "non-synchronized". Four types of handover defined in section 3.4.4.2 of GSM04.08: *Non-synchronized, Synchronized, Pre-synchronized, and Pseudo-synchronized.* The UMA to GSM handover can be either a non-synchronized or pre-synchronized handover. Synchronized handover and pseudo-synchronized handover require the MS to calculate the timing advance based on known one way delay with the old BTS and the Observed Time Difference between the old and new BTS (more description in annex A of GSM05.10). For a UMA to GSM handover, such variables are unknown. The ROT field of this IE shall be set to 0 so that the MS does not need to report its Observed Time Difference in the HANDOVER COMPLETE message.

*Mode of the First Channel* IE: If this information element is not present, the channel mode of the previously allocated channel shall be assumed.

*Frequency Channel Sequence, Frequency List, Frequency short list* and *Mobile Allocation,* after time IEs: If at least one of the channel descriptions for after time indicates frequency hopping, one of the following information elements will be present:
*Frequency Channel Sequence, after time;*
*Frequency list, after time;*
*Frequency Short List, after time;*
*Mobile Allocation, after time.*

If neither of the *Channel Description* IEs indicate frequency hopping, if they are not required for the decoding of *Channel Description* IEs for before time, and if any of the four information elements are present, they will be considered as IEs unnecessary in the message.

The *Frequency Channel Sequence* IE shall not be used unless all the ARFCNs that it indicates are in the P-GSM band. The *starting time* IE is included when the network wants the MS to change the frequency parameters of the channels more or less at the moment a change of channel occurs. In this case a number of information elements may be included to give the frequency parameters to be used before the starting time. The *starting time* IE refers to the new cell time. If the *starting time* IE is present and none of the information elements referring to before the starting time are present, the MS waits and accesses the channels at the indicated time. If the *starting time* IE is present and at least one of the information elements referring to before the starting time is present, the MS does not wait for the indicated time and accesses the channel using the frequency parameters for before the starting time. If the *starting time* IE is not present and some of the information elements referring to before the starting time are present, these information elements shall be considered as IEs unnecessary in the message.

If the *description of the first channel, before time* IE is not present, the channel description to apply for before the time, if needed, is given by the *description of the first channel, after time* IE. If the *description of the second channel, after time* IE is present, the *description of the second channel, before time* IE not present, and a description of the configuration for before the time needed, the channel configuration before the starting time is nevertheless of two traffic channels, and the channel description to apply to the second channel before the starting time is given by the *description of the second channel, after time* IE.

If the *starting time* IE is present and at least one of the channel descriptions for before the starting time indicates frequency hopping, one and only one of the following information elements may be present and applies before the starting time to all assigned channels:
*Mobile Allocation, before time* IE;
*Frequency Short list, before time* IE;
*Frequency list, before time* IE;
*Frequency channel sequence, before time* IE.

If the *starting time* IE is present and at least one of the channel descriptions for before the starting time indicates frequency hopping, and none of the above mentioned IE is present, a frequency list for after the starting time must be present, and this list applies also for the channels before the starting time.

Reference cell frequency list: If any of the *mobile allocation* information elements are present, then the *cell channel description* IE must be present. It is used to decode the m*obile allocation* IEs in the message. In addition, if no information elements pertaining to before the starting time is present in the message, the frequency list defined by the *cell channel description* IE is used to decode the m*obile allocation* IEs in later messages received in the new cell until reception of a new reference cell frequency list or the new cell is left.

The *Timing Advance* IE element will be present if the "synchronization indication" element indicates a pre-synchronized handover. If not included for a pre-synchronized handover, then the default value as defined in GSM 05.10 shall be used. For other types of handover it shall be considered as an unnecessary information element.

The *CIPHER Mode Setting* IE: If this information element is omitted, the mode of ciphering is not changed after the MS has switched to the assigned channel. The *Multi Rate Configuration* IE appears if the *Mode of the First Channel* IE indicates a multi-rate speech codec, and if the assigned configuration is new, *i.e.* it is different from the MultiRateconfiguration used in the serving cell. If the *Mode of the First Channel* IE indicates a multi-rate speech codec, and this IE is not included, then the MS shall assume that the MultiRateconfiguration has not changed.

Figure 27 shows details of one embodiment of a URR HANDOVER FAILURE message. In addition to the basic IEs, this message includes a *UMA RR Cause* IE, with an applicable value as defined in the value table of Figure 14.

### Release of URR

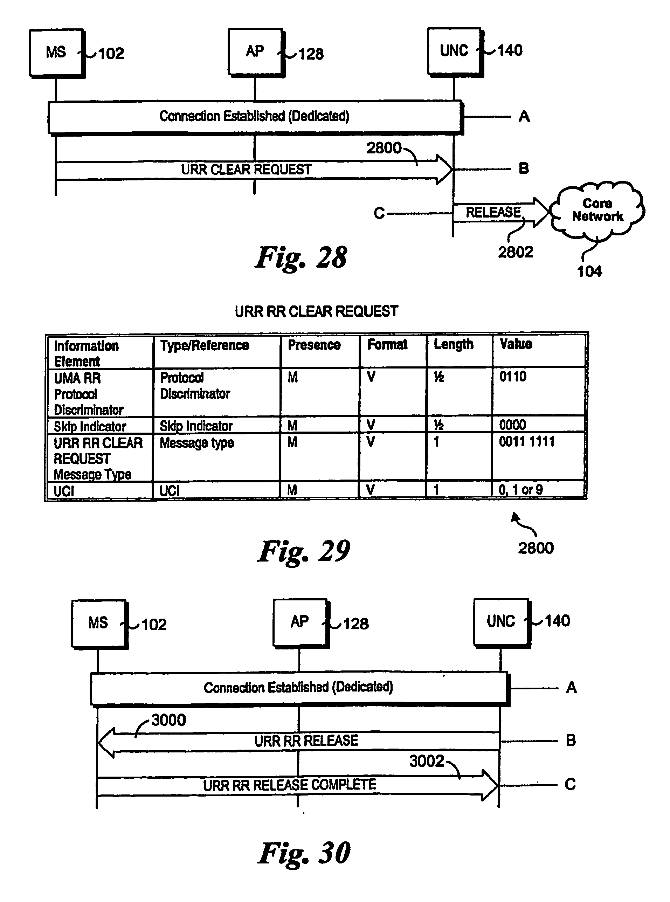

Release of the URR connection and signaling may be initiated by the MS or the UNC. Figure 28 shows a URR release that is initiated by an MS. At step A, a connection between MS 102 and UNC 140 is established, with the MS operating in the dedicated state. To release the URR, the MS sends a URR CLEAR REQUEST message 2800 to the UNC at step B. Details of one embodiment of the URR CLEAR REQUEST message are shown in Figure 29. This message format includes the basic IEs, with the message identified by the message type value. In response to the URR CLEAR REQUEST message, the UNC sends a release request 2802 to the core network to release resources used for the URR connection, as shown at step C. In response, the core network will initiate the release of the appropriate resources for the URR connection. The release typically results in the sequence shown in Figure 30.

Figure 30 shows a message sequence corresponding to an URR release that is either initiated by the UNC or results when the UNC receives the URR CLEAR REQUEST message.. As before, at step A a connection between MS 102 and UNC 140 is established, with the MS operating in the dedicated state. At step B, the UNC sends a URR RR RELEASE message 3000 (alternatively called a URR RELEASE message) to the MS. (In further detail, the UNC will typically receive the URR CLEAR REQUEST, sends a Clear Request message to the MSC, then the MSC releases the session, resulting in the UNC sending the URR RELEASE message.) In response, the MS returns a URR RR RELEASE COMPLETE message 3002 (alternatively called a URR RELEASE COMPLETE message) to the UNC at step C. In addition the MS releases all URR resources and any traffic channel resources and then enters a URR-IDLE state.

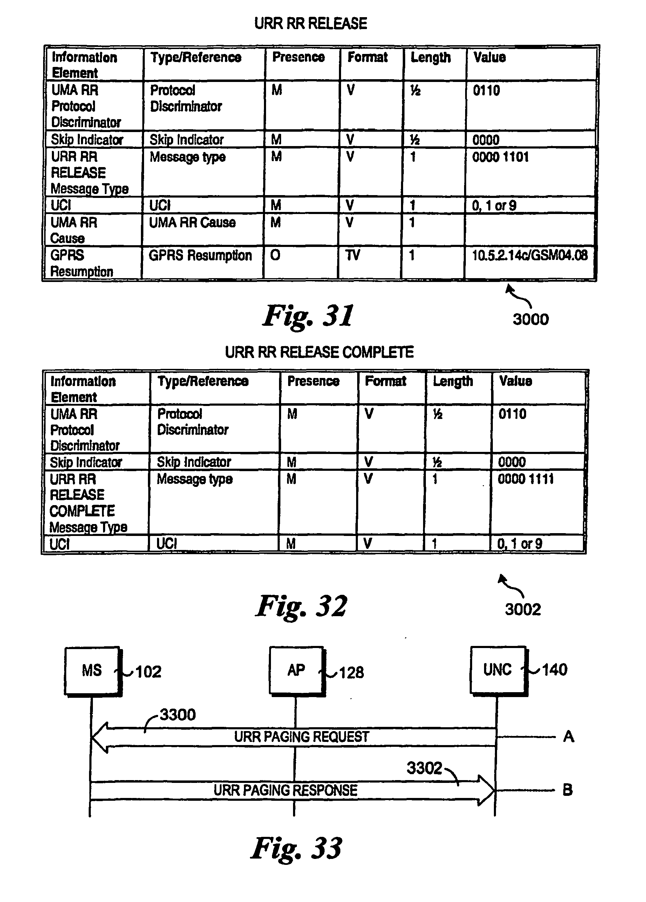

Figure 31 shows details of one embodiment of a URR (RR) RELEASE message. In addition to the basic IEs, this message format includes a *UMA RR Cause* IE and an optional *GPRS Resumption* IE. The *UMA RR Cause* IE is used to define the reason for the release, via a corresponding value defined in the table-of Figure 14. The *GPRS* (General Packet Radio Service) *Resumption* IE is used to indicate whether the UNC has successfully resumed a GPRS session that the MS suspended when it started the URR session.

Figure 32 shows details of one embodiment of a URR (RR) RELEASE COMPLETE message. This message format includes the basic IEs, with the message identified by the message type value.

### Paging Messages

The UNC initiates paging when it receives a PAGING REQUEST message over the A-interface or a Paging CS message over the Gb-interface. The MS to be paged is identified by the identity received in the request. An exemplary exchange of paging messages is shown in Figure 33. The sequence starts with UNC 140 sending a URR PAGING REQUEST message 3300 to MS 102 at step A. At step B, the MS returns a URR PAGING RESPONSE message 3302. This message is sent from the MS to the UNC as the first message over the newly established UMA RR session in response to the URR PAGING REQUEST message.

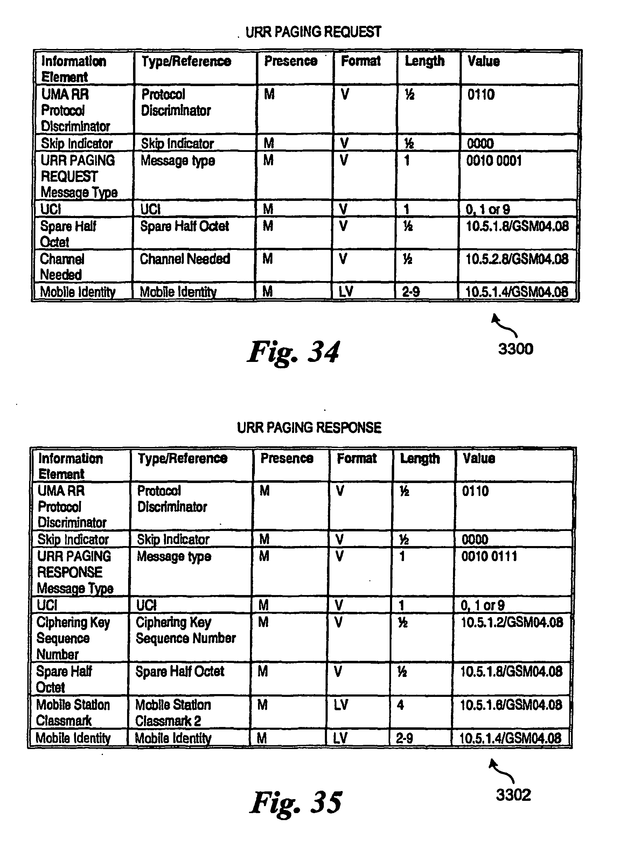

Figure 34 shows details of one embodiment of a URR PAGING REQUEST message. In addition to the basic IEs, this message format includes a *Channel Needed* IE (used to indicate whether the page is for signaling session establishment or call establishment), and a *Mobile Identity* IE (used to identify the MS).

Figure 35 shows details of one embodiment of a URR PAGING RESPONSE message. In addition to the basic IEs, this message format includes a *Ciphering Key Sequence Number IE, a Channel Needed* IE, and a *Mobile Identity* IE. The purpose of the *Ciphering Key Sequence Number* information element is to make it possible for the network to identify the ciphering key K_{c} which is stored in the mobile station without invoking an authentication procedure. K_{c} gets generated and stored when the MS is authenticated (challenged with a random number) by the network. While K_{c} is not used to encrypt the call when in UMA mode, it may be necessary if the call gets handed over to GSM. If the network does not authenticate every call (*e.g.*, every 3 or 4 calls), the *Ciphering Key Sequence Number IE* provides a way to select a stored K_{c} value.

### Classmark Messages

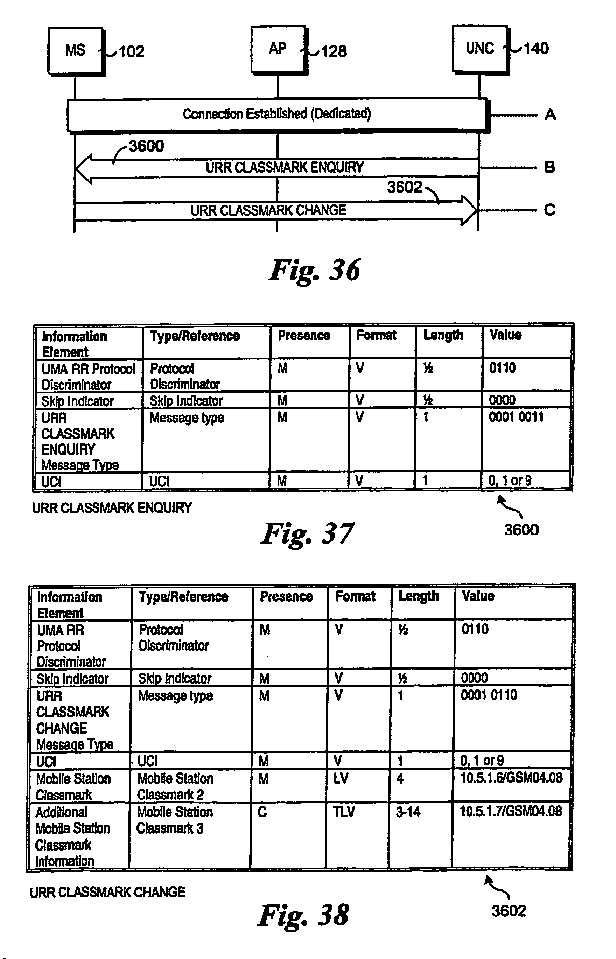

Classmark messages are used to enable a UNC to gain information about an MS's capabilities. The classmark interrogation procedure may be initiated when the MS has established a dedicated connection (*i.e.*, the MS is in URR-DEDICATED mode), as shown at step A in Figure 36. As shown at step B, the UNC initiates the classmark interrogation procedure by sending a URR CLASSMARK ENQUIRY message 3600 to the MS. In response, the MS returns a URR CLASSMARK CHANGE message 3602 at step C.

Figure 37 shows details of one embodiment of a URR CLASSMARK ENQUIRY message. The illustrated message format includes the basic IEs, with the message being identified by the message type value.

Figure 38 shows details of one embodiment of a URR CLASSMARK CHANGE message. In addition to the basic IEs, this message includes a *Mobile State Classmark* IE, and an *Additional Mobile Station Classmark Information* EE. The *Mobile State Classmark* IE includes the Classmark 2 information corresponding to the frequency band currently being used by the GSM RR entity, as defined by GSM04.08. An *Additional Mobile Station Classmark Information* IE will be included if the CM3 bit in the *Mobile Station Classmark* IE is set to 1. This IE provides additional MS capabilities for Classmark 3 as defined by GSM04.08.

### UNC Architecture

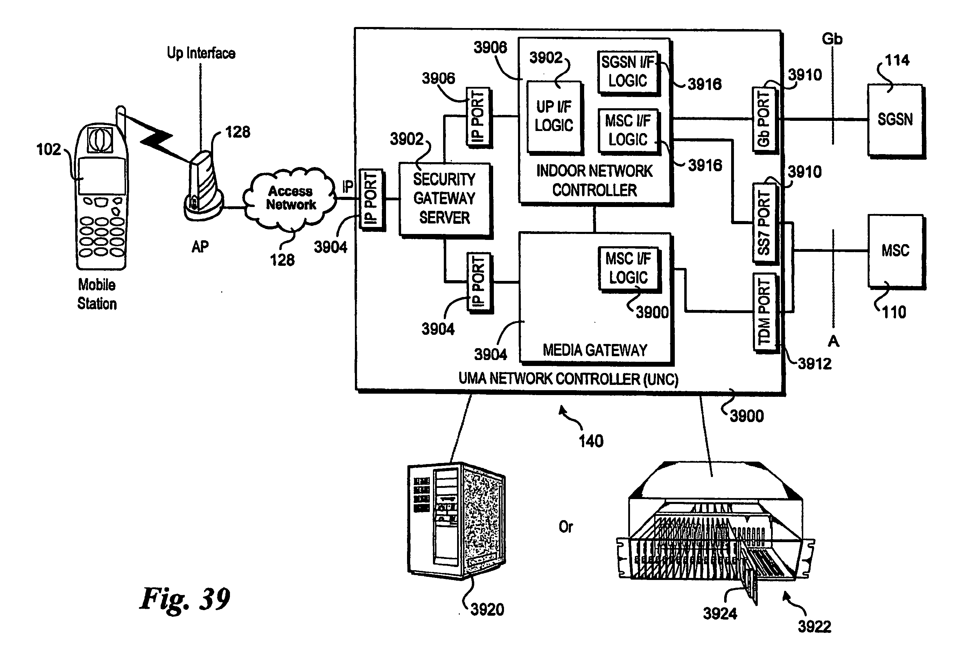

A block diagram illustrating a high level architecture corresponding to one embodiment of a UNC is shown in Figure 39. At the heart of the UNC architecture is an indoor network controller (INC) . In general, the INC performs operations synonymous to those described above for the UNC. However, as shown in the illustrated UNC architecture, an integrated security gateway server is included, as well as a media gateway which is controlled by the INC. Accordingly, each of these elements is shown as a separate element that is employed to facilitate various aspects of the UNC operations described herein.

In general, the UNC may provide one or more communication ports to support communications between mobile stations and the UNC (*e.g.*, via and AP and broadband IP network as shown in Figure 1). For example, in the illustrated embodiment of Figure 39, security gateway server is coupled to IP network via an IP port . In addition, IP ports and are used to connect INC and media gateway to the security gateway server.

The security gateway server performs security and authentication services. It may be an integrated unit (as shown), or may be a separate (physical) unit connected to the UNC via an appropriate communication link. Likewise, media gateway , which serves as a media gateway for voice services provided by the core network, may comprise an integrated unit (as shown) or a separate unit connected to the INC and security gateway servers via appropriate communication links.

The INC includes resources to support (*i.e.*, generate and process) the UP interface messages described herein. These resources are depicted as UP Interface (I/F) logic . Similarly, INC includes SGSN interface logic to support communications with SGSN via a Gb port, and MSC interface logic to support communication with MSC via an SS7 port . Meanwhile, media gateway includes MSC interface logic to support communication with MSC via a TDM port . Each of UP interface logic , SGSN interface logic , and MSC interface logic may be implemented via execution of software, built-in programmed hardware, or a combination of the two. For example, UP interface logic may be facilitated by executing one or more software modules on a processor, wherein the software modules are coded to generate and/or process URR messages.

In general, a UNC may be implemented by a single server, multiple distributed servers, and multiple clustered servers. For example, a single server may be employed for running various software applications to provide the various functions shown in the block diagram of the UNC architecture of Figure 39. Optionally, some of the functions, such as the security gateway server functions and/or media gateway functions, may be provided by a separate server or servers. In yet another configuration, a blade server is employed. The blade server includes multiple server blades that are installed in a common rack or chassis, with each server blade functioning as a separate server, each with its own processor(s), memory, and network interfaces. In one embodiment, the functions provided by each of the security gateway server, INC , and media gateway are facilitated via execution of software applications and/or modules on respective server blades .

### Mobile Station Architecture

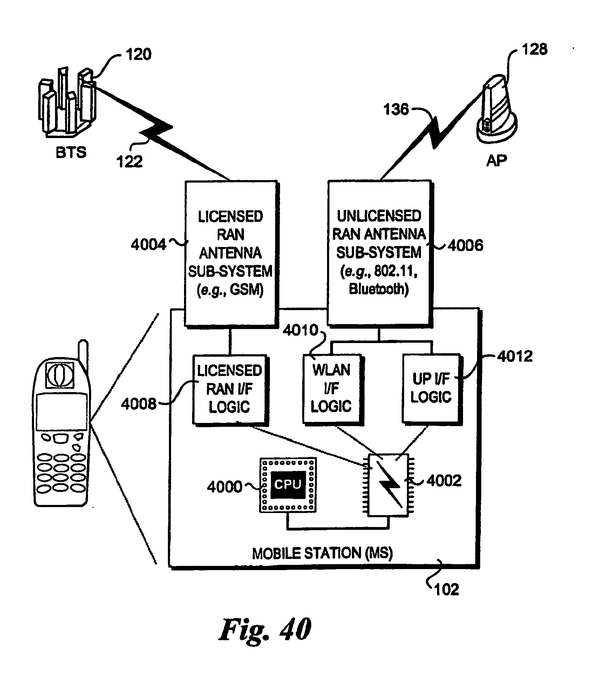

Figure 40 shows a block diagram illustrating a high-level architecture for one embodiment of a mobile station. The architecture includes a processor 4000 coupled to a non-volatile memory 4002, a licensed RAN antenna sub-system 4004 and an unlicensed RAN antenna sub-system 4006. Non-volatile memory 4002 is used to store software/firmware instructions for performing various functions and operations described herein. These functions and operations are depicted licensed RAN interface logic 4008, WLAN interface logic 4010, and Up interface logic 4012.

Licensed RAN antenna subs-system 4004 and licensed RAN interface logic 4008 are employed to facilitate conventional licensed RAN operations. For example, in one embodiment the licensed RAN comprises a GSM network, and thus these components facilitate normal GSM network operations typically employed by GSM-based cellular devices and the like, which are well-known in the cellular communication art. Meanwhile, the unlicensed RAN antenna system 4006 and WLAN interface logic 4010 are used to support an unlicensed wireless channel (*i.e.*, link) 136 with an access point 128 via which UMAN services may be accessed. In general, these blocks represent conventional components and logic employed to support communications over an unlicensed WLAN link. For example, these components are illustrative of components that may be employed to implement the Bluetooth lower layers shown in Figure 3B for a Bluetooth link, or the 802.11 lower layers shown in Figure 3C for an 802.11 link.

Up interface logic 4012 is used to provide the MS-side Up interface functions and operations described herein. This includes generating and processing various URR messages, as well as providing the various UP interface layers depicted in Figures 3A and 3D-F.

As discussed above, the various message formats depicted herein are exemplary. However, each message should include a basic set of information elements including a protocol discriminator, a skip indicator, and a message identity. The inclusion of an UCI information element as a basic IE is depicted in the exemplary message formats illustrated herein; however, the UCI IE or a similar IE for indicating whether a message is a first message, other message, or emergency-related is not required and this functionality may be facilitated by other means, such as by maintaining appropriate state information on the communicating devices (*i.e.*, mobile stations and UNCs).

Under a proposed implementation, message delineation over a streaming transport (*e.g.*, TCP) is performed by the underlying transport itself. Accordingly, there is not a need to include an information element specifying the length of a variable-length message format. However, this is not meant to be limiting, as the use of an information element for specifying the length of a message is contemplated by the inventors as another means for delineating streamed messages.

The formats of the various information elements is also merely exemplary. For example, a given set of information may be provided via a single IE or via multiple IEs. Furthermore, the information contained in the IEs depicted herein may be arranged in other formats and/or grouped in alternate manners.

The means for facilitating various message generation and processing operations, as well as various aspects of the Up interface may include execution of software/firmware instructions on an appropriate processing element, such as, but not limited to, a processor, multiple processors, a multi-core processor, a microcontroller, *etc.* Thus, embodiments of this invention may be used as or to support instructions executed upon some form of processing core or otherwise implemented or realized upon or within a machine-readable medium. A machine-readable medium includes any mechanism for storing or transmitting information in a form readable by a machine (*e.g.*, a computer). For example, a machine-readable medium can include a read only memory (ROM); a random access memory (RAM); a magnetic disk storage media; an optical storage media; and a flash memory device, *etc.* In addition, a machine-readable medium can include propagated signals such as electrical, optical, acoustical or other form of propagated signals (*e.g.*, carrier waves, infrared signals, digital signals, etc.). For example, in one contemplated implementation, instructions embodied as software upgrades for facilitating UMA messaging may be downloaded to a mobile device via a wireless link, such as a UMAN or GSM link.

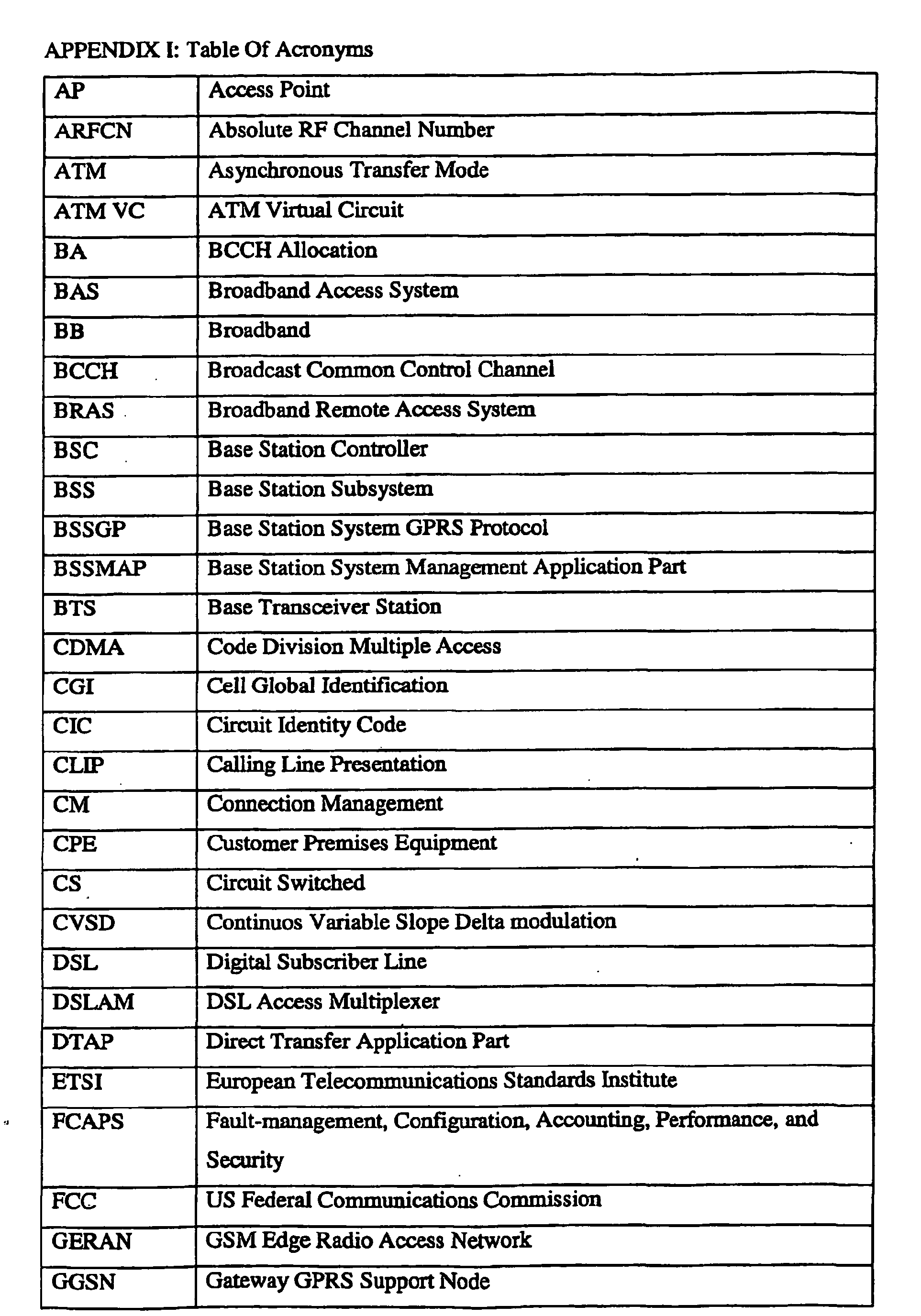

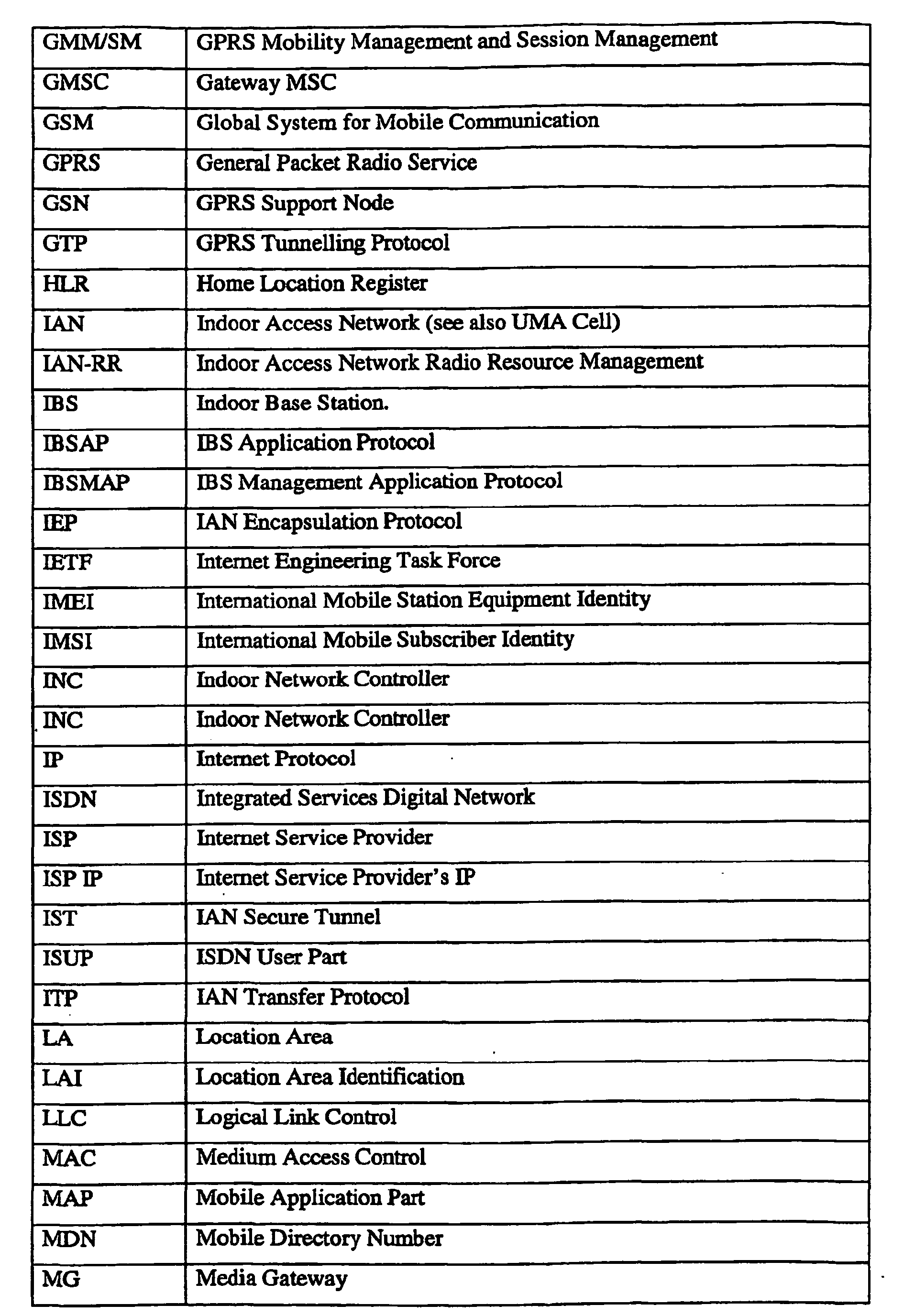

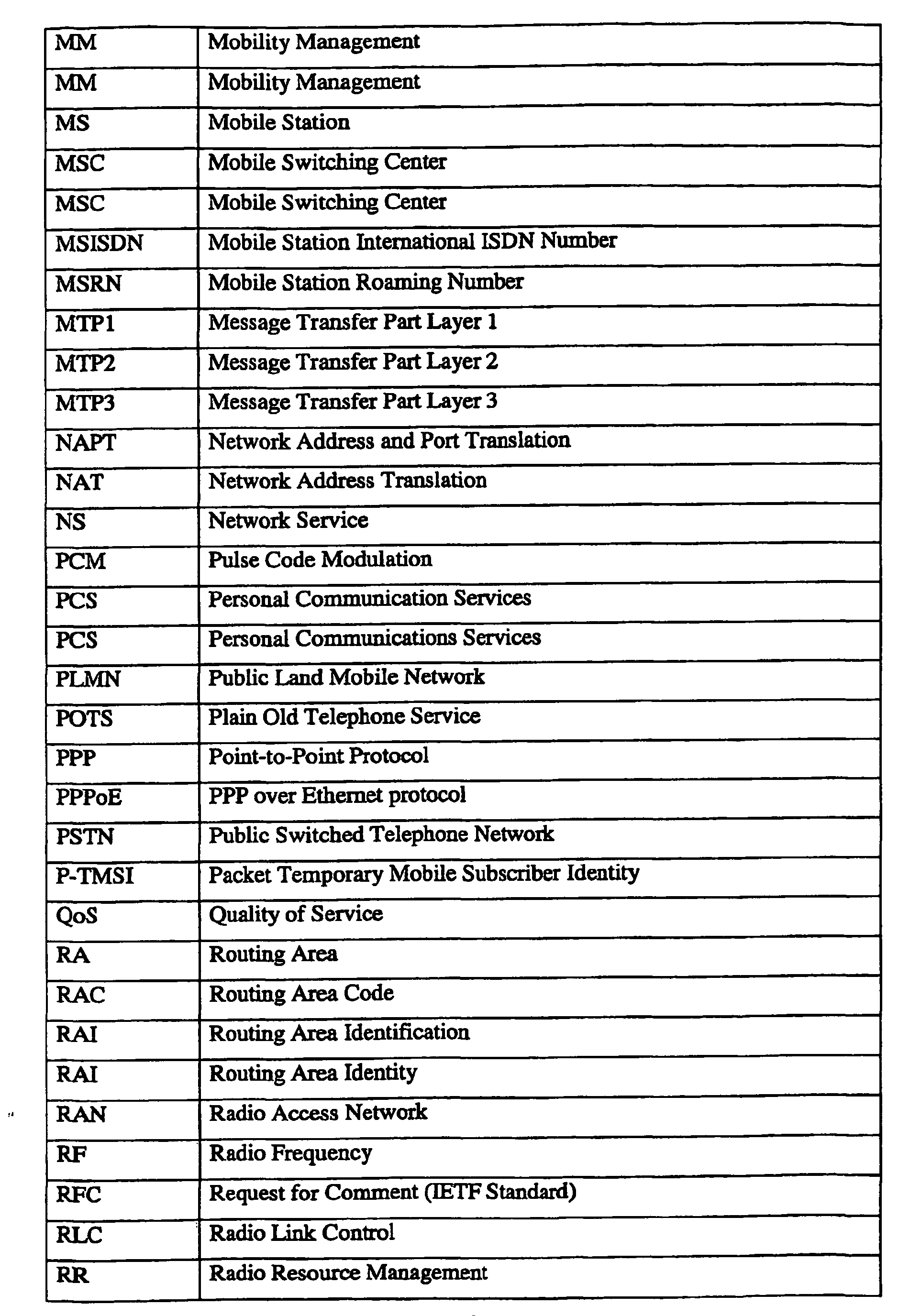

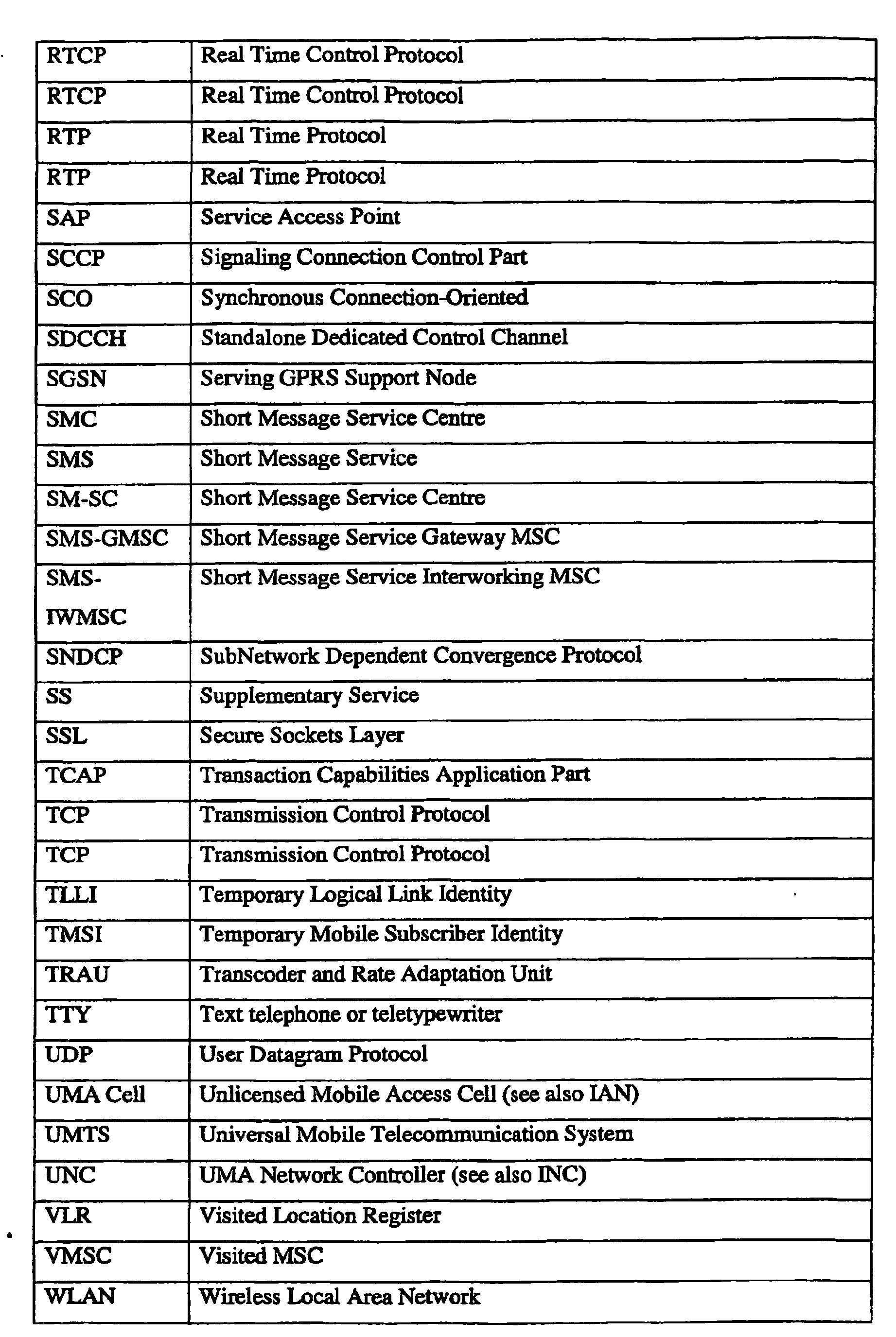

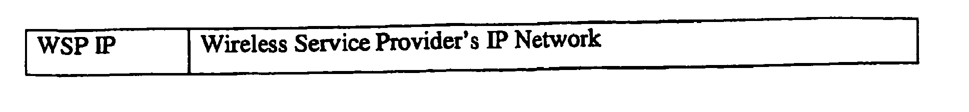

## Claims

1. A method for performing a handover of a mobile station, MS, (102) from an unlicensed wireless first communication system to a second communication system comprising a licensed radio access network and a core network, the unlicensed wireless first communication system comprising a network controller (140) for communicatively coupling the MS to the core network of the second communication system, the method comprising:
establishing a Transmission Control Protocol, TCP, session between the network controller and the MS via an access point, AP (128);
receiving at the network controller from the MS a message (2302) indicating that a handover is required, wherein the handover required message comprises an information element, IE, that identifies one or more cells operating in the licensed radio access network of the second communication system to which the MS is to be connected to complete the handover from the unlicensed wireless first communication system; and
sending a handover command message (2304) from the network controller to the MS, wherein each of the handover required message and the handover command message comprises a set of basic IEs comprising a protocol discriminator, a skip indicator, and a message type via which the corresponding message is to be identified.

2. The method of claim 1, wherein the handover command message further comprises at least one IE comprising information to support handover of the MS from the unlicensed wireless first communication system to the licensed radio access network of the second communication system.

3. The method of claim 1 further comprising receiving at the network controller a handover failure message (2306) from the MS when the handover of the MS from the unlicensed wireless first communication system to the licensed radio access network of the second communication system has failed, the handover failure message comprising the set of basic IEs and a cause IE that indicates a cause for the failure.

4. A computer readable medium storing a computer program for a mobile station, MS, (102) the computer program for execution by at least one processor to perform a handover of the MS to an unlicensed wireless first communication system from a second communication system comprising a licensed radio access network and a core network, the unlicensed wireless first communication system comprising a network controller (140) for communicatively coupling the MS to the core network of the second communication system, the computer program comprising sets of instructions for:
establishing a Transmission Control Protocol, TCP, session between the MS and the network controller via an access point, AP (128);
registering the MS with the network controller;
sending from the MS to the network controller a handover access message (2000) comprising an information element, IE, that includes an embedded handover command message;
establishing a channel between the MS and the network controller; and
sending a handover complete message (2002) from the MS to the network controller, wherein each of the handover access message and the handover complete message comprises a set of basic IEs comprising a protocol discriminator, a skip indicator, and a message type via which the corresponding message is to be identified.

5. A network controller (140) for communicatively coupling a mobile station, MS, (102) operating in an unlicensed wireless first communication system to a second communication system comprising a licensed radio access network and a core network, the network controller comprising:
a first network interface (322A) comprising an Internet Protocol, IP, network interface;
a second network interface (204, 316-320) via which messages are to be transmitted to and received from the MS via an access point, AP, (128) communicatively coupled between the network controller and the MS, the second network interface comprising a plurality of layers implemented over the IP network interface;
a third network interface (302-310) via which the network controller connects to the core network of the second communication system; and
means for generating and processing a plurality of messages transmitted over the second interface to perform handovers of the MS between the unlicensed wireless first communication system and the licensed radio access network of the second communication system, wherein the plurality of messages comprises a handover access message (2000) and a handover complete message (2002) received at the network controller from the MS to perform a handover of the MS from the second communication system to the unlicensed wireless first communication system, wherein each of the handover access message and the handover complete message includes a set of basic information elements, IEs, comprising a protocol discriminator, a skip indicator, and a message type via which the corresponding message is to be identified, wherein the handover access message further comprises an information element, IE, that includes an embedded handover command message.

6. The network controller of claim 5, wherein the plurality of messages further comprises a message (2302) indicating that a handover is required and a handover command message (2304) to perform a handover of the MS from the unlicensed wireless first communication system to the licensed radio access network of the second communication system, wherein the handover required message is received at the network controller from the MS and the handover command message is sent from the network controller to the MS, wherein each of the handover required message and the handover command message comprises the set of basic IEs, wherein the handover required message further comprises an IE that identifies one or more cells operating in the licensed radio access network of the second communication system to which the MS is to be connected to complete the handover from the unlicensed wireless first communication system.

7. The network controller of claim 6, wherein the handover command message further comprises at least one IE comprising information to support handover of the MS from the unlicensed wireless first communication system to the licensed radio access network of the second communication system.

8. The network controller of claim 6, wherein the plurality of messages further comprises a handover failure message (2306) received at the network controller from the MS when the handover of the MS from the unlicensed wireless first communication system to the licensed radio access network of the second communication system has failed, the handover failure message comprising the set of basic IEs and a cause IE that indicates a cause for the failure.

9. The network controller of claim 5, wherein the third network interface comprises an A interface.

10. The network controller of claim 5, wherein the unlicensed wireless first communication system comprises a plurality of service regions serviced by the network controller.

11. A mobile station, MS, (102) comprising:
a first wireless interface (136) to access an unlicensed wireless first communication system comprising an access point, AP (128);
a second wireless interface (122) to access a second communication system comprising a licensed radio access network;
a third interface (204, 316-320) to communicate with the unlicensed wireless first communication system comprising a network controller (140) communicatively coupled to the AP via an Internet Protocol, IP, network; and
means for generating and processing a plurality of messages transmitted over the third interface to perform handovers of the MS between the licensed radio access network of the second communication system and the unlicensed wireless first communication system, the plurality of messages comprising a message (2302) indicating that a handover is required and a handover command message (2304) to perform a handover of the MS from the unlicensed wireless first communication system to the second communication system, the handover required message sent from the MS to the network controller and the handover command message received at the MS from the network controller, wherein each of the handover required message and the handover command message comprises a set of basic IEs comprising a protocol discriminator, a skip indicator, and a message type via which the corresponding message is to be identified.

12. The mobile station of claim 11, wherein the handover required message further comprises at least one IE that identifies one or more cells operating in the licensed radio access network of the second communication system to which the MS is to be connected to complete the handover from the unlicensed wireless first communication system.

13. The mobile station of claim 11, wherein the handover command message further comprises at least one IE comprising information to support handover of the MS from the unlicensed wireless first communication system to the licensed radio access network of the second communication system.

14. The mobile station of claim 11, wherein the plurality of messages further comprises a handover failure message (2306) sent from the MS when the handover of the MS from the wireless first communication system to the licensed radio access network of the second communication system has failed, the handover failure message comprising the set of basic IEs and a cause IE that indicates a cause for the failure.

15. The mobile station of claim 11, wherein the plurality of messages further comprises a handover access message (2000) and a handover complete message (2002) sent from the MS to the network controller to perform a handover of the MS from the second communication system to the unlicensed wireless first communication system, wherein each of the handover access message and the handover complete message includes the set of basic IEs, wherein the handover access message further comprises an IE that includes an embedded handover command message.

## Patentansprüche

1. Verfahren zum Ausführen einer Übergabe einer Mobilstation (MS) (102) eines unlizenzierten drahtlosen ersten Kommunikationssystems an ein zweites Kommunikationssystem, das ein lizenziertes Funkzugangsnetz und ein Kernnetz umfasst, wobei das unlizenzierte drahtlose erste Kommunikationssystem einen Netzwerk-Controller (140) zum kommunikativen Koppeln der MS an das Kernnetz des zweiten Kommunikationssystems umfasst, wobei das Verfahren Folgendes umfasst:
Herstellen einer Transmission Control Protocol (TCP)-Sitzung zwischen dem Netzwerk-Controller und der MS über einen Zugangspunkt (AP) (128);
Empfangen, in dem Netzwerk-Controller, einer Nachricht (2302) von der MS, die anzeigt, dass eine Übergabe erforderlich ist, wobei die "Übergabe erforderlich"-Nachricht ein Informationselement (IE) umfasst, das eine oder mehrere Zellen identifiziert, die in dem lizenzierten Funkzugangsnetz des zweiten Kommunikationssystems arbeiten, mit denen die MS verbunden werden soll, um die Übergabe von dem unlizenzierten drahtlosen ersten Kommunikationssystem zu vollenden; und
Senden einer Übergabebefehlsnachricht (2304) von dem Netzwerk-Controller an die MS, wobei die "Übergabe erforderlich"-Nachricht und die Übergabebefehlsnachricht jeweils einen Satz Basis-IEs umfassen, der einen Protokolldiskriminator, einen Überspringindikator und einen Nachrichtentyp, anhand dessen die entsprechende Nachricht zu identifizieren ist, umfasst.

2. Verfahren nach Anspruch 1, wobei die Übergabebefehlsnachricht auch mindestens eine IE umfasst, die Informationen umfasst, um die Übergabe der MS von dem unlizenzierten drahtlosen ersten Kommunikationssystem an das lizenzierte Funkzugangsnetz des zweiten Kommunikationssystems zu unterstützen.

3. Verfahren nach Anspruch 1, das auch Folgendes umfasst:
Empfangen, in dem Netzwerk-Controller, einer "Übergabe gescheitert"-Nachricht (2306) von der MS, wenn die Übergabe der MS von dem unlizenzierten drahtlosen ersten Kommunikationssystem an das lizenzierte Funkzugangsnetz des zweiten Kommunikationssystems gescheitert ist, wobei die "Übergabe gescheitert"-Nachricht den Satz Basis-IEs und eine Ursachen-IE, die die Ursache für das Scheitern angibt, umfasst.

4. Computerlesbares Speichermedium, das ein Computerprogramm für eine Mobilstation (MS) (102) speichert, wobei das Computerprogramm zur Ausführung durch mindestens einen Prozessor vorgesehen ist, um eine Übergabe der MS an ein unlizenziertes drahtloses erstes Kommunikationssystem von einem zweiten Kommunikationssystem durchzuführen, das ein lizenziertes Funkzugangsnetz und ein Kernnetz umfasst, wobei das unlizenzierte drahtlose erste Kommunikationssystem einen Netzwerk-Controller (140) zum kommunikativen Koppeln der MS an das Kernnetz des zweiten Kommunikationssystems umfasst, wobei das Computerprogramm Instruktionssätze umfasst zum:
Herstellen einer Transmission Control Protocol (TCP)-Sitzung zwischen der MS und dem Netzwerk-Controller über einen Zugangspunkt (AP) (128);
Anmelden der MS beim dem Netzwerk-Controller;
Senden - von der MS an den Netzwerk-Controller - einer Übergabezugriffsnachricht (2000), die ein Informationselement (IE) umfasst, das eine eingebettete Übergabebefehlsnachricht enthält;
Herstellen eines Kanals zwischen der MS und dem Netzwerk-Controller; und
Senden einer Übergabevollendungsnachricht (2002) von der MS an den Netzwerk-Controller, wobei die Übergabezugriffsnachricht und die Übergabevollendungsnachricht jeweils einen Satz Basis-IEs umfassen, der einen Protokolldiskriminator, einen Überspringindikator und einen Nachrichtentyp, anhand dessen die entsprechende Nachricht zu identifizieren ist, umfasst.

5. Netzwerk-Controller (140) zum kommunikativen Koppeln einer Mobilstation (MS) (102), die in einem unlizenzierten drahtlosen ersten Kommunikationssystem arbeitet, mit einem zweiten Kommunikationssystem, das ein lizenziertes Funkzugangsnetz und ein Kernnetz umfasst, wobei der Netzwerk-Controller Folgendes umfasst:
eine erste Netzwerkschnittstelle (322A), die eine Internet Protocol (IP)-Netzwerkschnittstelle umfasst;
eine zweite Netzwerkschnittstelle (204, 316-320), über die Nachrichten über einen Zugangspunkt (AP) (128), der kommunikativ zwischen dem Netzwerk-Controller und der MS gekoppelt ist, an die MS zu senden und von der MS zu empfangen sind, wobei die zweite Netzwerkschnittstelle mehrere Schichten umfasst, die durch die IP-Netzwerkschnittstelle implementiert werden;
eine dritte Netzwerkschnittstelle (302-310), über die der Netzwerk-Controller mit dem Kernnetz des zweiten Kommunikationssystems verbunden ist; und
ein Mittel zum Erzeugen und Verarbeiten mehrerer Nachrichten, die über die zweite Schnittstelle übertragen werden, zum Ausführen von Übergaben der MS zwischen dem unlizenzierten drahtlosen ersten Kommunikationssystem und dem lizenzierten Funkzugangsnetz des zweiten Kommunikationssystems, wobei die mehreren Nachrichten eine Übergabezugriffsnachricht (2000) und eine Übergabevollendungsnachricht (2002), die in dem Netzwerk-Controller von der MS kommend empfangen werden, umfassen, um eine Übergabe der MS von dem zweiten Kommunikationssystems an das unlizenzierte drahtlose erste Kommunikationssystem auszuführen, wobei die Übergabezugriffsnachricht und die Übergabevollendungsnachricht jeweils einen Satz Basis-Informationselemente (IE) enthalten, der einen Protokolldiskriminator, einen Überspringindikator und einen Nachrichtentyp, anhand dessen die entsprechende Nachricht zu identifizieren ist, umfasst, wobei die Übergabezugriffsnachricht auch ein Informationselement (IE) umfasst, das eine eingebettete Übergabebefehlsnachricht enthält.

6. Netzwerk-Controller nach Anspruch 5, wobei die mehreren Nachrichten auch Folgendes umfassen: eine Nachricht (2302), die anzeigt, dass eine Übergabe erforderlich ist, und eine Übergabebefehlsnachricht (2304) zum Ausführen einer Übergabe der MS von dem unlizenzierten drahtlosen ersten Kommunikationssystem an das lizenzierte Funkzugangsnetz des zweiten Kommunikationssystems, wobei die "Übergabe erforderlich"-Nachricht in dem Netzwerk-Controller von der MS kommend empfangen wird und die Übergabebefehlsnachricht von dem Netzwerk-Controller an die MS gesendet wird, wobei die "Übergabe erforderlich"-Nachricht und die Übergabebefehlsnachricht jeweils den Satz Basis-IEs umfassen, wobei die "Übergabe erforderlich"-Nachricht auch eine IE umfasst, die eine oder mehrere Zellen identifiziert, die in dem lizenzierten Funkzugangsnetz des zweiten Kommunikationssystems arbeiten und mit denen die MS verbunden werden soll, um die Übergabe von dem unlizenzierten drahtlosen ersten Kommunikationssystem zu vollenden.

7. Netzwerk-Controller nach Anspruch 6, wobei die Übergabebefehlsnachricht auch mindestens eine IE umfasst, die Informationen umfasst, um die Übergabe der MS von dem unlizenzierten drahtlosen ersten Kommunikationssystem an das lizenzierte Funkzugangsnetz des zweiten Kommunikationssystems zu unterstützen.

8. Netzwerk-Controller nach Anspruch 6, wobei die mehreren Nachrichten auch eine "Übergabe gescheitert"-Nachricht (2306) umfassen, die in dem Netzwerk-Controller von der MS kommend empfangen wird, wenn die Übergabe der MS von dem unlizenzierten drahtlosen ersten Kommunikationssystem an das lizenzierte Funkzugangsnetz des zweiten Kommunikationssystems gescheitert ist, wobei die "Übergabe gescheitert"-Nachricht den Satz Basis-IEs und eine Ursachen-IE, die die Ursache für das Scheitern angibt, umfasst.

9. Netzwerk-Controller nach Anspruch 5, wobei die dritte Netzwerkschnittstelle eine A-Schnittstelle umfasst.

10. Netzwerk-Controller nach Anspruch 5, wobei das unlizenzierte drahtlose erste Kommunikationssystem mehrere Service-Regionen umfasst, die durch den Netzwerk-Controller bedient werden.

11. Mobilstation (MS) (102), die Folgendes umfasst:
eine erste Drahtlos-Schnittstelle (136) zum Zugreifen auf ein unlizenziertes drahtloses erstes Kommunikationssystem, das einen Zugangspunkt (AP) (128) umfasst;
eine zweite Drahtlos-Schnittstelle (122) zum Zugreifen auf ein zweites Kommunikationssystem, das ein lizenziertes Funkzugangsnetz umfasst;
eine dritte Schnittstelle (204, 316-320) zum Kommunizieren mit dem unlizenzierten drahtlosen ersten Kommunikationssystem, das einen Netzwerk-Controller (140) umfasst, der mit dem AP über ein Internet Protocol (IP)-Netzwerk kommunikativ gekoppelt ist; und
ein Mittel zum Erzeugen und Verarbeiten mehrerer Nachrichten, die über die dritte Schnittstelle übertragen werden, zum Ausführen von Übergaben der MS zwischen dem lizenzierten Funkzugangsnetz des zweiten Kommunikationssystems und dem unlizenzierten drahtlosen ersten Kommunikationssystem, wobei die mehreren Nachrichten eine Nachricht (2302), die anzeigt, dass eine Übergabe erforderlich ist, und eine Übergabebefehlsnachricht (2304) zum Ausführen einer Übergabe der MS von dem unlizenzierten drahtlosen ersten Kommunikationssystem an das zweite Kommunikationssystem umfassen, wobei die "Übergabe erforderlich"-Nachricht von der MS an den Netzwerk-Controller gesendet wird und die Übergabebefehlsnachricht von dem Netzwerk-Controller kommend in der MS empfangen wird, wobei die "Übergabe erforderlich"-Nachricht und die Übergabebefehlsnachricht jeweils einen Satz Basis-IEs umfassen, der einen Protokolldiskriminator, einen Überspringindikator und einen Nachrichtentyp, anhand dessen die entsprechende Nachricht zu identifizieren ist, umfasst.

12. Mobilstation nach Anspruch 11, wobei die "Übergabe erforderlich"-Nachricht auch mindestens eine IE umfasst, die eine oder mehrere Zellen identifiziert, die in dem lizenzierten Funkzugangsnetz des zweiten Kommunikationssystems arbeiten und mit denen die MS verbunden werden soll, um die Übergabe von dem unlizenzierten drahtlosen ersten Kommunikationssystem zu vollenden.

13. Mobilstation nach Anspruch 11, wobei die Übergabebefehlsnachricht auch mindestens eine IE umfasst, die Informationen umfasst, um die Übergabe der MS von dem unlizenzierten drahtlosen ersten Kommunikationssystem an das lizenzierte Funkzugangsnetz des zweiten Kommunikationssystems zu unterstützen.

14. Mobilstation nach Anspruch 11, wobei die mehreren Nachrichten auch eine "Übergabe gescheitert"-Nachricht (2306) umfassen, die von der MS gesendet wird, wenn die Übergabe der MS von dem drahtlosen ersten Kommunikationssystem an das lizenzierte Funkzugangsnetz des zweiten Kommunikationssystems gescheitert ist, wobei die "Übergabe gescheitert"-Nachricht den Satz Basis-IEs und eine Ursachen-IE, die die Ursache für das Scheitern angibt, umfasst.

15. Mobilstation nach Anspruch 11, wobei die mehreren Nachrichten auch eine Übergabezugriffsnachricht (2000) und eine Übergabevollendungsnachricht (2002), die von der MS an den Netzwerk-Controller gesendet wird, zum Ausführen einer Übergabe der MS von dem zweiten Kommunikationssystem an das unlizenzierte drahtlose erste Kommunikationssystem umfassen, wobei die Übergabezugriffsnachricht und die Übergabevollendungsnachricht jeweils den Satz Basis-IEs enthalten, wobei die Übergabezugriffsnachricht auch eine IE umfasst, die eine eingebettete Übergabebefehlsnachricht enthält.

## Revendications

1. Procédé destiné à mettre en oeuvre un transfert intercellulaire d'une station mobile, MS, (102) d'un premier système de communication sans fil sans licence à un second système de communication comprenant un réseau d'accès radio sous licence et un coeur de réseau, le premier système de communication sans fil sans licence comprenant un contrôleur de réseau (140) pour coupler, de manière à pouvoir communiquer, la station MS au coeur de réseau du second système de communication, le procédé comprenant les étapes ci-dessous consistant à :
établir une session de protocole de contrôle de transmission, TCP, entre le contrôleur de réseau et la station MS par l'intermédiaire d'un point d'accès, AP (128) ;
recevoir, au niveau du contrôleur de réseau, en provenance de la station MS, un message (2302) indiquant qu'un transfert intercellulaire est requis, dans lequel le message de transfert intercellulaire requis comprend un élément d'information, IE, lequel identifie une ou plusieurs cellules opérant dans le réseau d'accès radio sous licence du second système de communication auquel la station MS doit être connectée, en vue d'achever le transfert intercellulaire à partir du premier système de communication sans fil sans licence ; et
envoyer un message de commande de transfert intercellulaire (2304), du contrôleur de réseau à la station MS, dans lequel chaque message, parmi le message de transfert intercellulaire requis et le message de commande de transfert intercellulaire, comprend un ensemble d'éléments IE de base comprenant un discriminateur de protocole, un indicateur de saut, et un type de message par l'intermédiaire desquels le message correspondant doit être identifié.

2. Procédé selon la revendication 1, dans lequel le message de commande de transfert intercellulaire comprend en outre au moins un élément IE comprenant des informations pour prendre en charge le transfert intercellulaire de la station MS, du premier système de communication sans fil sans licence au réseau d'accès radio sous licence du second système de communication.

3. Procédé selon la revendication 1, comprenant en outre l'étape consistant à recevoir, au niveau du contrôleur de réseau, un message d'échec de transfert intercellulaire (2306) en provenance de la station MS, lorsque le transfert intercellulaire de la station MS, du premier système de communication sans fil sans licence au réseau d'accès radio sous licence du second système de communication, a échoué, le message d'échec de transfert intercellulaire comprenant l'ensemble d'éléments IE de base et un élément IE de cause qui indique une cause de l'échec.

4. Support lisible par ordinateur stockant un programme informatique pour une station mobile, MS, (102) le programme informatique étant destiné à être exécuté par au moins un processeur en vue de mettre en oeuvre un transfert intercellulaire de la station MS, vers un premier système de communication sans fil sans licence à partir d'un second système de communication comprenant un réseau d'accès radio sous licence et un coeur de réseau, le premier système de communication sans fil sans licence comprenant un contrôleur de réseau (140) pour coupler, de manière à pouvoir communiquer, la station MS au coeur de réseau du second système de communication, le programme informatique comprenant des jeux d'instructions pour :
établir une session de protocole de contrôle de transmission, TCP, entre la station MS et le contrôleur de réseau par l'intermédiaire d'un point d'accès, AP (128) ;
enregistrer la station MS auprès du contrôleur de réseau ;
envoyer, de la station MS au contrôleur de réseau, un message d'accès de transfert intercellulaire (2000) comprenant un élément d'information, IE, lequel comprend un message de commande de transfert intercellulaire intégré ;
établir un canal entre la station MS et le contrôleur de réseau ; et
envoyer un message de transfert intercellulaire réussi (2002) de la station MS au contrôleur de réseau, dans lequel chaque message, parmi le message d'accès de transfert intercellulaire et le message de transfert intercellulaire réussi, comprend un ensemble d'éléments IE de base comprenant un discriminateur de protocole, un indicateur de saut, et un type de message par l'intermédiaire desquels le message correspondant doit être identifié.

5. Contrôleur de réseau (140) pour coupler, de manière à pouvoir communiquer, une station mobile, MS, (102) opérant dans un premier système de communication sans fil sans licence, à un second système de communication comprenant un réseau d'accès radio sous licence et un coeur de réseau, le contrôleur de réseau comprenant :
une première interface de réseau (322A) comprenant une interface de réseau de protocole Internet, IP ;
une deuxième interface de réseau (204, 316 - 320) par l'intermédiaire de laquelle des messages doivent être transmis vers et reçus en provenance de la station MS par l'intermédiaire d'un point d'accès, AP, (128) couplé, de manière à pouvoir communiquer, entre le contrôleur de réseau et la station MS, la deuxième interface de réseau comprenant une pluralité de couches mises en oeuvre sur l'interface de réseau IP ;
une troisième interface de réseau (302 - 310) par l'intermédiaire de laquelle le contrôleur de réseau se connecte au coeur de réseau du second système de communication ; et
un moyen pour générer et traiter une pluralité de messages transmis sur la deuxième interface en vue de mettre en oeuvre des transferts intercellulaires de la station MS, entre le premier système de communication sans fil sans licence et le réseau d'accès radio sous licence du second système de communication, dans lequel la pluralité de messages comprend un message d'accès de transfert intercellulaire (2000) et un message de transfert intercellulaire réussi (2002) reçus, au niveau du contrôleur de réseau, en provenance de la station MS, pour mettre en oeuvre un transfert intercellulaire de la station MS, du second système de communication au premier système de communication sans fil sans licence, dans lequel chaque message, parmi le message d'accès de transfert intercellulaire et le message de transfert intercellulaire réussi comprend un ensemble d'éléments d'information de base, IE, comprenant un discriminateur de protocole, un indicateur de saut, et un type de message par l'intermédiaire desquels le message correspondant doit être identifié, dans lequel le message d'accès de transfert intercellulaire comprend en outre un élément d'information, IE, lequel comprend un message de commande de transfert intercellulaire intégré.

6. Contrôleur de réseau selon la revendication 5, dans lequel la pluralité de messages comprend en outre un message (2302) indiquant qu'un transfert intercellulaire est requis et un message de commande de transfert intercellulaire (2304) en vue de mettre en oeuvre un transfert intercellulaire de la station MS, du premier système de communication sans fil sans licence au réseau d'accès radio sous licence du second système de communication, dans lequel le message de transfert intercellulaire requis est reçu au niveau du contrôleur de réseau en provenance de la station MS, et le message de commande de transfert intercellulaire est envoyé du contrôleur de réseau à la station MS, dans lequel chaque message, parmi le message de transfert intercellulaire requis et le message de commande de transfert intercellulaire comprend l'ensemble d'éléments IE de base, dans lequel le message de transfert intercellulaire requis comprend en outre un élément IE, lequel identifie une ou plusieurs cellules opérant dans le réseau d'accès radio sous licence du second système de communication auquel la station MS doit être connectée en vue d'achever le transfert intercellulaire à partir du premier système de communication sans fil sans licence.

7. Contrôleur de réseau selon la revendication 6, dans lequel le message de commande de transfert intercellulaire comprend en outre au moins un élément IE comprenant des informations pour prendre en charge le transfert intercellulaire de la station MS, du premier système de communication sans fil sans licence au réseau d'accès radio sous licence du second système de communication.

8. Contrôleur de réseau selon la revendication 6, dans lequel la pluralité de messages comprend en outre un message d'échec de transfert intercellulaire (2306) reçu, au niveau du contrôleur de réseau, en provenance de la station MS, lorsque le transfert intercellulaire de la station MS, du premier système de communication sans fil sans licence au réseau d'accès radio sous licence du second système de communication, a échoué, le message d'échec de transfert intercellulaire comprenant l'ensemble d'éléments IE de base et un élément IE de cause qui indique une cause de l'échec.

9. Contrôleur de réseau selon la revendication 5, dans lequel la troisième interface de réseau comprend une interface A.

10. Contrôleur de réseau selon la revendication 5, dans lequel le premier système de communication sans fil sans licence comprend une pluralité de zones de service desservies par le contrôleur de réseau.

11. Station mobile, MS, (102) comprenant :
une première interface sans fil (136) pour accéder à un premier système de communication sans fil sans licence comprenant un point d'accès, AP (128) ;
une deuxième interface sans fil (122) pour accéder à un second système de communication comprenant un réseau d'accès radio sous licence ;
une troisième interface (204, 316 - 320) pour communiquer avec le premier système de communication sans fil sans licence comprenant un contrôleur de réseau (140) couplé, de manière à pouvoir communiquer, au point d'accès, par l'intermédiaire d'un réseau de protocole Internet, IP ; et
un moyen pour générer et traiter une pluralité de messages transmis sur la troisième interface, en vue de mettre en oeuvre des transferts intercellulaires de la station MS, entre le réseau d'accès radio sous licence du second système de communication et le premier système de communication sans fil sans licence, la pluralité de messages comprenant un message (2302) indiquant qu'un transfert intercellulaire est requis, et un message de commande de transfert intercellulaire (2304) pour mettre en oeuvre un transfert intercellulaire de la station MS, du premier système de communication sans fil sans licence au second système de communication, le message de transfert intercellulaire requis étant envoyé de la station MS au contrôleur de réseau, et le message de commande de transfert intercellulaire étant reçu au niveau de la station MS en provenance du contrôleur de réseau, dans lequel chaque message parmi le message de transfert intercellulaire requis et le message de commande de transfert intercellulaire comprend un ensemble d'éléments IE de base comprenant un discriminateur de protocole, un indicateur de saut, et un type de message par l'intermédiaire desquels le message correspondant doit être identifié.

12. Station mobile selon la revendication 11, dans lequel le message de transfert intercellulaire requis comprend en outre au moins un élément IE, lequel identifie une ou plusieurs cellules opérant dans le réseau d'accès radio sous licence du second système de communication auquel la station MS doit être connectée en vue d'achever le transfert intercellulaire à partir du premier système de communication sans fil sans licence.

13. Station mobile selon la revendication 11, dans lequel le message de commande de transfert intercellulaire comprend en outre au moins un élément IE comprenant des informations pour prendre en charge le transfert intercellulaire de la station MS, du premier système de communication sans fil sans licence au réseau d'accès radio sous licence du second système de communication.

14. Station mobile selon la revendication 11, dans lequel la pluralité de messages comprend en outre un message d'échec de transfert intercellulaire (2306) envoyé à partir de la station MS lorsque le transfert intercellulaire de la station MS, du premier système de communication radio sans fil au réseau d'accès radio sous licence du second système de communication, a échoué, le message d'échec de transfert intercellulaire comprenant l'ensemble d'éléments IE de base et un élément IE de cause qui indique une cause de l'échec.

15. Station mobile selon la revendication 11, dans lequel la pluralité de messages comprend en outre un message d'accès de transfert intercellulaire (2000) et un message de transfert intercellulaire réussi (2002) envoyés, à partir de la station MS, au contrôleur de réseau, en vue de mettre en oeuvre un transfert intercellulaire de la station MS, du second système de communication au premier système de communication sans fil sans licence, dans lequel chaque message, parmi le message d'accès de transfert intercellulaire et le message de transfert intercellulaire réussi, comprend l'ensemble d'éléments IE de base, dans lequel le message d'accès de transfert intercellulaire comprend en outre un élément IE lequel comprend un message de commande de transfert intercellulaire intégré.
